(19) Europäisches Patentamt
European Patent Office
Office européen des brevets

(11) **EP 4 645 271 A1**

(12) **EUROPEAN PATENT APPLICATION**
published in accordance with Art. 153(4) EPC

(43) Date of publication:
**05.11.2025 Bulletin 2025/45**

(21) Application number: **23910084.5**

(22) Date of filing: **12.12.2023**

(51) International Patent Classification (IPC):
**G06V 40/18** *(2022.01)* **G06V 10/75** *(2022.01)*

(52) Cooperative Patent Classification (CPC):
**G06V 10/75; G06V 40/18**

(86) International application number:
**PCT/CN2023/138083**

(87) International publication number:
**WO 2024/140154 (04.07.2024 Gazette 2024/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.12.2022 CN 202211716327**

(71) Applicant: **Beijing Zitiao Network Technology Co.,
Ltd.
Beijing 100190 (CN)**

(72) Inventors:
• **CHI, Liying
Beijing 100028 (CN)**
• **LONG, Xiang
Beijing 100028 (CN)**

(74) Representative: **Marks & Clerk LLP
15 Fetter Lane
London EC4A 1BW (GB)**

(54) **GAZE DETECTION METHOD AND APPARATUS, AND ELECTRONIC DEVICE AND STORAGE MEDIUM**

(57) Embodiments of the invention provides a method, an apparatus of line-of-sight detection, an electronic device and a storage medium, obtaining a current image frame and a first reference image frame, where in the current image frame is an eye image collected in real time, and the first reference image frame is an eye image collected before the current image frame; obtaining an inter-frame variation amount of the current image frame relative to the first reference image frame; and deriving a target gaze direction based on the inter-frame variation amount, where the target gaze direction is a first gaze direction or a second gaze direction, the first gaze direction is a gaze direction pre-generated based on the first reference image frame, and the second gaze direction is a gaze direction generated in real time based on the current image frame. By comparing the inter-frame variation amount between the current image frame and the first reference image frame, the first gaze direction corresponding to the first reference image frame or the second gaze direction corresponding to the current image frame is opportunistically selected as the target gaze direction, the computational overhead during the line-of-sight detection process can be reduced, thereby improving the real-time performance of line-of-sight detection.

```
                                              S101
┌────────────────────────────────────────────────┐
│ OBTAIN A CURRENT IMAGE FRAME AND A FIRST         │
│ REFERENCE IMAGE FRAME, WHEREIN THE CURRENT       │
│ IMAGE FRAME IS AN EYE IMAGE COLLECTED IN REAL    │
│ TIME, AND THE FIRST REFERENCE IMAGE FRAME IS     │
│ AN EYE IMAGE COLLECTED BEFORE THE CURRENT        │
│ IMAGE FRAME                                      │
└────────────────────────────────────────────────┘
                        │
                        ▼                     S102
┌────────────────────────────────────────────────┐
│ OBTAIN AN INTER-FRAME VARIATION AMOUNT OF THE    │
│ CURRENT IMAGE FRAME RELATIVE TO THE FIRST        │
│ REFERENCE IMAGE FRAME                            │
└────────────────────────────────────────────────┘
                        │
                        ▼                     S103
┌────────────────────────────────────────────────┐
│ DERIVE A TARGET GAZE DIRECTION BASED ON THE      │
│ INTER-FRAME VARIATION AMOUNT, WHERE THE TARGET   │
│ GAZE DIRECTION IS A FIRST GAZE DIRECTION OR A    │
│ SECOND GAZE DIRECTION, THE FIRST GAZE            │
│ DIRECTION IS A GAZE DIRECTION PRE-GENERATED      │
│ BASED ON THE FIRST REFERENCE IMAGE FRAME, AND    │
│ THE SECOND GAZE DIRECTION IS A GAZE DIRECTION    │
│ GENERATED IN REAL TIME BASED ON THE CURRENT      │
│ IMAGE FRAME                                      │
└────────────────────────────────────────────────┘
```

FIG. 2

## Description

**The** present application claims priority to Chinese Patent Application No. 202211716327.X, filed on December 28, 2022 and entitled "METHOD AND APPARATUS OF LINE-OF-SIGHT DETECTION, ELECTRONIC DEVICE AND STORAGE MEDIUM", the entirety of which is incorporated herein by reference.

FIELD

The embodiment of the present disclosure relates to the field of computer vision, in particular to a method and an apparatus of line-of-sight detection, an electronic device and a storage medium.

BACKGROUND

Line-of-sight detection is a means for estimating and prediction a line-of-sight direction of a user by comprehensive utilization of mechanical, optical and electronic technologies, and is widely applied to the technical fields of virtual reality (VR) technology, augmented reality (AR) technology, assisted driving, and the like.

**In** the related art, line-of-sight detection is usually based on an image collection unit deposited in a terminal device, for example, a camera in a VR headset, to collect and analyze an image of an eye region of a user, so as to predict a real-time line-of-sight direction of the user.

However, existing visual detection solutions suffer from issues such as high power consumption and poor real-time performance.

**SUMMARY**

Embodiments of the invention provides a method and an apparatus of line-of-sight detection, an electronic device and a storage medium, and aims to overcome the problems of high detection power consumption and real-time detection in the prior art.

**In** a first aspect, an embodiment of the present disclosure provides a method of line-of-sight detection, including:

obtaining a current image frame and a first reference image frame, wherein the current image frame is an eye image collected in real time, and the first reference image frame is an eye image collected before the current image frame; obtaining an inter-frame variation amount of the current image frame relative to the first reference image frame; and deriving a target gaze direction based on the inter-frame variation amount, where the target gaze direction is a first gaze direction or a second gaze direction, the first gaze direction is a gaze direction pre-generated based on the first reference image frame, and the second gaze direction is a gaze direction generated in real time based on the current image frame.

**In** a second aspect, an embodiment of the present disclosure provides a method of controlling a device, including:

obtaining a current image frame and a first reference image frame, where the current image frame is an eye image collected in real time, and the first reference image frame is an eye image collected before the current image frame; obtaining an inter-frame variation amount of the current image frame relative to the first reference image frame; deriving a target gaze direction based on the inter-frame variation amount; and controlling the device based on the target gaze direction.

**In** a third aspect, an embodiment of the present disclosure provides an apparatus of line-of-sight detection, including:

**an** obtaining module configured to obtain a current image frame and a first reference image frame, where the current image frame is an eye image collected in real time, and the first reference image frame is an eye image collected before the current image frame;

**a** processing module configured to obtain an inter-frame variation amount of the current image frame relative to the first reference image frame ;

**a** determining module configured to derive a target gaze direction based on the inter-frame variation amount, where the target gaze direction is a first gaze direction or a second gaze direction, the first gaze direction is a gaze direction pre-generated based on the first reference image frame, and the second gaze direction is a gaze direction generated in real time based on the current image frame.

**In** a fourth aspect, an embodiment of the present disclosure provides an electronic device, including:

**a** processor, and a memory communicatively connected to the processor ;

the memory storing computer executable instructions;

the processor executes the computer executable instructions stored in the memory to implement the method of line-of-sight detection according to the first aspect and various possible designs of the first aspect, or the method of controlling a device according to the second aspect and the possible designs of the second aspect.

**In** a fourth aspect, an embodiment of the present disclosure provides a computer-readable storage medium, where the computer-executable instructions, when executed by a processor, implement the method of line-of-sight detection according to the first aspect and various possible designs of the first aspect, or the method of controlling a device according to the second aspect and the possible designs of the second aspect.

**In** a fifth aspect, an embodiment of the present disclosure provides a computer program product, including a computer program, where the computer program, when executed by a processor, implements the method of line-of-sight detection according to the first aspect and various possible designs of the first aspect, or the method of controlling a device according to the second aspect and the possible designs of the second aspect.

The method, apparatus of line-of-sight detection, the electronic device, and the storage medium provided in this embodiment involve the current image frame is an eye image collected in real time, and the first reference image frame is an eye image collected before the current image frame; obtaining an inter-frame variation amount of the current image frame relative to the first reference image frame; and deriving a target gaze direction based on the inter-frame variation amount, where the target gaze direction is a first gaze direction or a second gaze direction, the first gaze direction is a gaze direction pre-generated based on the first reference image frame, and the second gaze direction is a gaze direction generated in real time based on the current image frame. By comparing the inter-frame variation amount between the current image frame and the first reference image frame, the method appropriately selects either the first gaze direction corresponding to the first reference image frame or the second gaze direction corresponding to the current image frame as the target gaze direction. Since the first gaze direction corresponding to the first reference image frame is pre-obtained, no additional computation is required, which reduces the computational overhead during the line-of-sight detection process, lowers power consumption, and thus improves the real-time performance of line-of-sight detection.

**BRIEF DESCRIPTION OF DRAWINGS**

To more clearly illustrate embodiments of the present disclosure or the technical solutions in the prior art, the accompanying drawings used in the description of embodiments or the prior art will be briefly introduced below, and it will be apparent that the drawings in the following description are some embodiments of the present disclosure, and those skilled in the art may also obtain other drawings according to these drawings without exercising inventive effort.

FIG. 1 is an application scenario diagram of a method of line-of-sight detection according to an embodiment of the present disclosure;
FIG. 2 is a schematic flowchart 1 of a method of line-of-sight detection according to an embodiment of the present disclosure;
FIG. 3 is a flowchart of a specific implementation step of step S102 in embodiments shown in FIG. 2;
FIG. 4 is a schematic diagram of an eye region according to an embodiment of the present disclosure;
FIG. 5 is a flowchart of a specific implementation step of step S1021 in embodiments shown in FIG. 3;

FIG. 6 is a schematic diagram of region coordinates according to an embodiment of the present disclosure;
FIG. 7 is a flowchart of a specific implementation step of step S1023 in embodiments shown in FIG. 3;
FIG. 8 is a schematic diagram of a process of determining an inter-frame variation amount according to an embodiment of the present disclosure;
FIG. 9 is a schematic flowchart 2 of a method of line-of-sight detection according to an embodiment of the present disclosure;
FIG. 10 is a schematic diagram of a process of generating a target gaze direction according to an embodiment of the present disclosure;
FIG. 11 is a flowchart of a specific implementation step of step S210 in embodiments shown in FIG. 9;
FIG. 12 is a structural block diagram of an apparatus of line-of-sight detection according to an embodiment of the present disclosure;
FIG. 13 is a schematic structural diagram of an electronic device according to an embodiment of the present disclosure; and
FIG. 14 is a schematic diagram of a hardware structure of an electronic device according to an embodiment of the present disclosure.

**DETAILED DESCRIPTION**

To make the objectives, technical solutions and advantages of embodiments of the present disclosure clearer, the technical solutions in embodiments of the present disclosure will be clearly and completely described below with reference to the accompanying drawings in embodiments of the present disclosure. All other embodiments obtained by those skilled in the art based on embodiments of the present disclosure without creative efforts shall fall within the scope of the present disclosure.

It should be noted that the user information (including but not limited to user equipment information, user personal information, etc. ) and data (including but not limited to data for analysis, stored data, displayed data, etc. ) involved in the present application are information and data are all authorized by the user or sufficiently authorized by the parties, and collection, use and processing of the related data needs to comply with relevant laws and regulations and standards of related countries and areas, and provide a corresponding operation portal for the user to select authorization or decline.

The following describes an application scenario of an embodiment of the present disclosure.

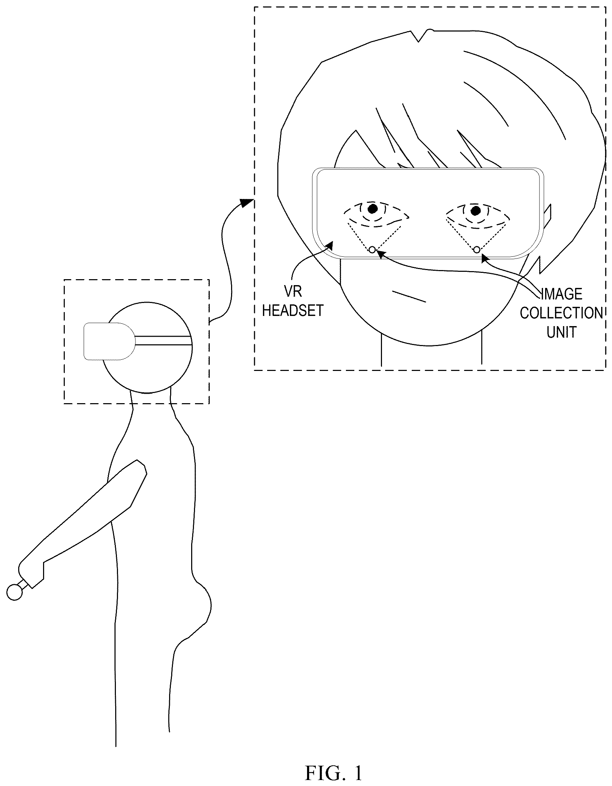

FIG. 1 is an application scenario diagram of a method of line-of-sight detection according to an embodiment of the present disclosure, and the method of line-of-sight detection provided by the embodiment of the present disclosure may be applied to an application scenarios requiring gaze estimation of the user based on virtual reality, augmented reality, and other technologies. More specifically, a virtual reality game (VR game) is used as an example, as shown in FIG. 1, the method provided in embodiments of the present disclosure may be applied to a terminal device, for example, a VR headset. The VR headset is equipped with an image collection unit, for example, a camera built in a VR headset, configured to collect an image of an eye region of a user. While the user is using (wearing) the VR headset, the VR headset collect an eye image of the user through a built-in camera, and performs line-of-sight evaluation based on the eye image to obtain a predicted line-of-sight direction. After that, the resolution of the image displayed in the display unit (for example, the display screen) of the VR headset can be further adjusted based on the line-of-sight direction, so as to achieve the purposes of dynamically adjusting the display resolution, reducing the display precision, reducing the data volume and the like.

When rendering high-resolution virtual reality scenes, the computing power and hardware specifications required for the terminal device are very high. To address this issue, the related technologies use line-of-sight detection and the line-of-sight tracking technology to adjust the resolution of different regions of the image. The regions within the user's field of view have higher resolution, enhancing visual effects, while the regions outside the user's field of view have lower resolution, reducing computational power consumption. However, the line-of-sight detection algorithms in the prior art typically require capturing images of the user's eye region and analyzing them frame by frame to predict the user's real-time line-of-sight direction. This process also consumes a significant amount of computing resources. Especially when applied to mobile devices with limited computing resources or VR games that require high real-time performance, it can lead to increased overall device power consumption, reduced detection real-time performance, and decreased smoothness of the display.

Embodiments of the present disclosure provide a method of line-of-sight detection to solve the above problem.

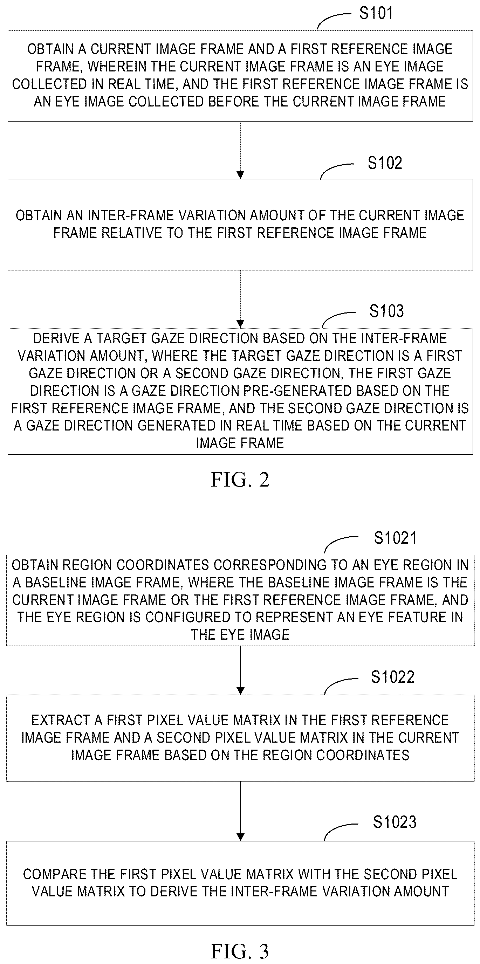

Referring to FIG. 2, which is a schematic flowchart 1 of a method of line-of-sight detection according to an embodiment of the present disclosure. The method of this embodiment may be applied to a terminal device, and the method of line-of-sight detection includes:

Step S101: Obtaining a current image frame and a first reference image frame, where the current image frame is an eye image collected in real time, and the first reference image frame is an eye image collected before the current image frame.

For example, referring to the application scenario schematic diagram shown in FIG. 1, the execution subject in this embodiment is a terminal device, and more specifically, for example, a VR headset or VR glasses. The terminal device is equipped with an image collection unit. When running a specific target application, such as a game application or a live streaming application, the terminal device captures images, i.e., eye images, of the user's eye region through the image collection unit. This process is continuous, for example, the terminal device starts continuously capturing eye images after starting the target application or function. From the second eye image frame onwards, each newly acquired eye image frame is used as the current image frame (e.g., the second frame), and the eye image collected before the current image frame (e.g., the first frame) is used as the first reference image frame. The collection frequency of the current image frame can be dynamically set according to other parameters, for example, dynamically adjusting the collection frequency based on the content of the image displayed on the terminal device. Of course, a fixed predetermined frequency can also be used to collect the current reference image, such as 100 milliseconds. The frequency can be set as needed and will not be further elaborated here.

The current image frame and the first reference image frame can be two adjacent eye image frames or two non-adjacent eye image frames, i.e., the current image frame and the first reference image frame are separated by N frames, where N is an integer greater than 1. In one possible implementation, after obtaining the current image frame (i.e., the most recently collected eye image), the terminal device uses the eye image collected a predetermined number of frames earlier as the first reference image frame. For example, after the terminal device collects the latest eye image frame P1, it uses the eye image P0 collected 10 frames before P1 as the first reference image frame. In another possible implementation, after obtaining the current image frame, the terminal device uses the eye image collected a predetermined time earlier as the first reference image frame. For example, after the terminal device collects the latest eye image frame P1, based on the collection time T of the eye image P1, it uses the eye image P2 collected at time T2, which is 50 milliseconds before T1, as the first reference image frame. The specific selection of the first reference image frame can be set as needed.

Step S102: Obtaining an inter-frame variation amount of the current image frame relative to the first reference image frame.

Furthermore, after obtaining the current image frame and the first reference image frame, the current image frame is compared to the first reference image frame to determine whether any changes have occurred between the two frames, or the extent of such changes, i.e., the inter-frame variation amount. One possible implementation is that the inter-frame variation amount can be a Boolean value, i.e., 0 or 1. For example, when the inter-frame variation amount is 0, it indicates that there is no change between the current image frame and the first reference image frame; when the inter-frame variation is 1, it indicates that there is a change between the current image frame and the first reference image frame. Another possible implementation is that the inter-frame variation amount can be a numerical value of integer type, floating-point type, etc., representing the magnitude of change between the current image frame and the first reference image frame. More specifically, for example, the inter-frame variation amount can be a normalized value ranging from 0 to 1. When the inter-frame variation amount is 0, it indicates that the current image frame is completely different from the first reference image frame; when the inter-frame variation amount is 1, it indicates that the current image frame is completely identical to the first reference image frame. There are various methods to compare the two image frames, such as pixel-by-pixel comparison to the two image frames to obtain the proportion of differing pixels, thereby deriving the inter-frame variation amount. Alternatively, feature extraction can be performed on both image frames to obtain feature matrices corresponding to the two image frames, and the similarity of the feature matrices can be calculated to derive the inter-frame variation amount.

In a possible implementation, as shown in FIG. 3, a specific implementation step of step S102 includes:
Step S1021: Obtaining region coordinates corresponding to an eye region in a baseline image frame, where the baseline image frame is the current image frame or the first reference image frame, and the eye region is used to represent an eye feature in the eye image.

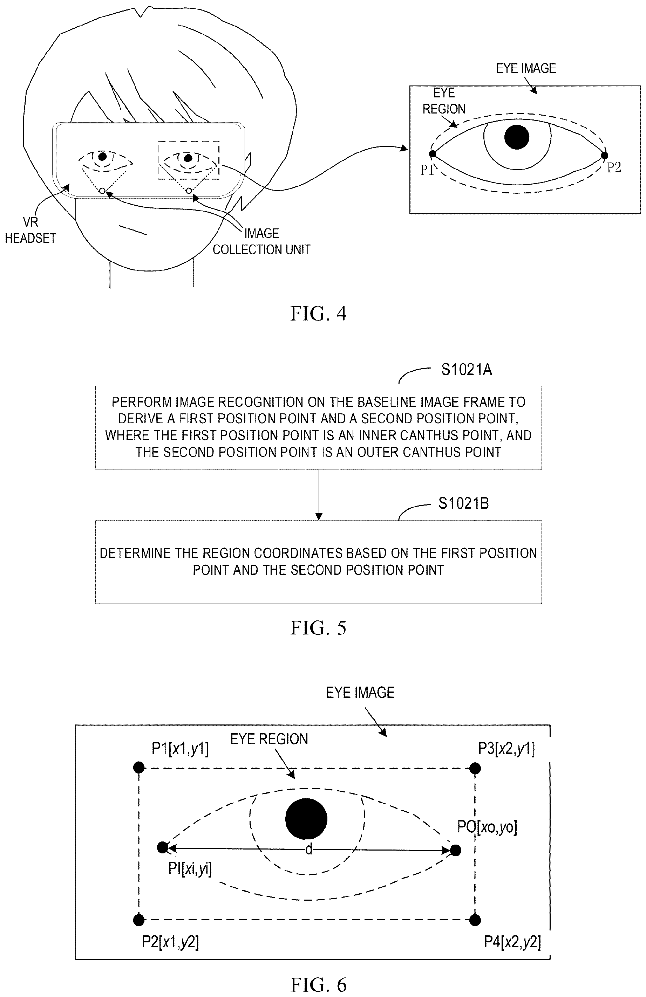

For example, the current image frame and the first reference image frame are eye images collected at different moments, i.e., photos taken by the image collection unit facing the user's eyes. One possible implementation is to choose any one of the current image frame or the first reference image frame as the baseline image frame and perform subsequent processing as needed. Further, the baseline image frame (eye image) includes an eye region representing the user's eye features and a non-eye region outside the eye region. The eye features refer to those features that can cause line-of-sight changes, such as the position of the pupil center and the position of the cornea, etc. FIG. 4 is a schematic diagram of an eye region provided in this embodiment of the present disclosure. As shown in FIG. 4, taking monocular line-of-sight detection as an example, the eye image includes an elliptical eye region. The "eye" in the image is mostly or entirely located within this eye region. The coordinates describing the position of this eye region in the eye image are the region coordinates. The eye region is the "key area" in the eye image that contains useful information. By dividing the eye region and marking the area in the eye image that can represent eye features, the inter-frame variation amount can be derived based on the comparison of the eye region. This allows the inter-frame variation amount to better reflect changes in the user's gaze direction.

Further, the region coordinates corresponding to the eye region in the baseline image frame may be obtained in various manners, in a possible implementation, the baseline image frame is, for example, the current image frame; as shown in FIG. 5, the specific implementation step of step S1021 includes:

**Step** S1021A: Performing image recognition on the current image frame to derive a first position point and a second position point, where the first position point is an inner canthus point, and the second position point is an outer canthus point.
**Step** S1021B: Determining region coordinates based on the first position point and the second position point.

For example, referring to the schematic diagram of the eye region shown in FIG. 4, the image content of the current image frame includes an "eye". Therefore, by performing image recognition on the current image frame, the inner canthus point (denoted as P1 in FIG. 4) and the outer canthus point (denoted as P2 in FIG. 4) are derived, which correspond to the first position point and the second position point, respectively. Specifically, there are shape characteristic differences between the inner canthus point and the outer canthus point. The process of recognizing the inner canthus point and the outer canthus point can be realized based on a pre-trained image recognition model, which will not be elaborated here.

After the first position point and the second position point are derived, the eye region is determined based on the physiological structure of the eye based on the physiological structure of the eye using the first position point (the inner canthus point) and the second position point (the outer canthus point) as the baseline point, so that the eye feature corresponding to the "eye" can fall into the eye region, and the invalid region corresponding to the part such as the eyebrow and the eye skin is discharged. In one possible implementation, the eye region is an ellipse surrounding the eye. The region coordinates of the eye region are the coordinates of the endpoints of the ellipse's major and minor axes. The major axis endpoint coordinates are the coordinates of the first position point and the second position point. The horizontal coordinates of the minor axis endpoints are determined based on the average horizontal coordinates of the first position point and the second position point, while the vertical coordinates are determined by weighting and adding (or subtracting) the Euclidean distance between the first position point and the second position point based on the vertical coordinates of the first position point and the second position point.

In another possible implementation, the eye region is a rectangular region surrounding the eye, and the region coordinates is four vertex coordinates of the rectangle. The specific steps to determine the region coordinates based on the first position point and the second position point include: obtaining the Euclidean distance between the first position point and the second position point; and performing weighted calculation on the coordinates corresponding to the first position point and the coordinates corresponding to the second position point based on the Euclidean distance to derive the vertex coordinates. FIG. 6 is a schematic diagram of a region coordinates according to an embodiment of the present disclosure. As shown in FIG. 6, after the first position point (the inner corner point, shown as PI [xi, yi]) and the second position point (the outer corner point, shown as PO [xo, yo]) are determined, the Euclidean distance d between the first position point and the second position point is calculated first, and then the vertical coordinates of the upper side and the lower side of the rectangular box are calculated as follows:

$$y1 = yi - m1*d$$

$$y2 = yi + m1*d$$

Where y1 is the vertical coordinates of the upper side, y2 is the vertical coordinates of the lower side, m1 is the weighting coefficient, e.g., m1 = 0.15.

Then, the horizontal coordinates of the left side and the horizontal coordinates of the right side of the rectangular box are calculated as:

$$x1 = xi - m2*d$$

$$x2 = xi + m3*d$$

Where X1 is the horizontal coordinates of the left side, x2 is the horizontal coordinates of the right side; m2 and m3 are weighting coefficients respectively, and different values are taken for m2 and m3 depending on whether the detected eye (left or right) in the eye image is being considered. For example, when the inner canthus of the detected eye in the eye image is to the left of the outer canthus, exemplarily, m2=0.2 and m3=1.1; when the inner canthus of the detected eye is to the right of the outer canthus, exemplarily, m2=1.1 and m3=0.2.

Finally, four vertices corresponding to the eye region are derived as P1, P2, P3, and P3, and coordinates are respectively P1 [x1, y1], P2 [x1, y2], P3 [x2, y1], and P4 [x2, y2].

Optionally, the generated region coordinates are correspondingly saved.

In another possible implementation, the baseline image frame is, for example, a first reference image frame; and the specific implementation step of step S1021 includes: reading the pre-generated region coordinates corresponding to the first reference image frame.

In this embodiment, the first reference image frame is used as the baseline image frame, because in the round of processing the first reference image frame (that is, the first reference image frame is used as the line-of-sight detection round of the current image frame), the corresponding region coordinates have been generated and saved, so that the region coordinates corresponding to the first reference image frame can be directly read, so that the generation process of the region coordinates is skipped, the line-of-sight detection efficiency is further improved, and the computational overhead is reduced.

Step S1022: extracting a first pixel value matrix in the first reference image frame and a second pixel value matrix in the current image frame based on the region coordinates;

Step S1023: comparing the first pixel value matrix and the second pixel value matrix to derive an inter-frame variation amount.

Further, after deriving the region coordinates, the first pixel value matrix in the first reference image frame and the second pixel value matrix in the current image frame are respectively extracted based on the region coordinates, where the region coordinates may be pixel coordinates; since the image size of the first reference image frame and the current image frame are consistent, the pixel coordinate systems of the first reference image frame and the current image frame are consistent. Pixel value extraction is performed in the first reference image frame and the current image frame based on the region coordinates, to derive a corresponding pixel value matrix, that is, the first pixel value matrix and the second pixel value matrix. The first reference image frame and the current image frame may have a plurality of pixel value channels (i.e., color images), or may have only one pixel value channel (grayscale image). When the first reference image frame and the current image frame have a plurality of pixel value channels, correspondingly, in the first pixel value matrix and the second pixel value matrix derived after the extraction, each matrix point includes an array of dimensions corresponding to the number of channels. In this case, the first pixel value matrix and the second pixel value matrix may be implemented by using a struct. The implementation may be set as required, and details are not described herein again. Then, the first pixel value matrix and the second pixel value matrix are compared, and the similarity between the first pixel value matrix and the second pixel value matrix is calculated to derive the inter-frame variation amount.

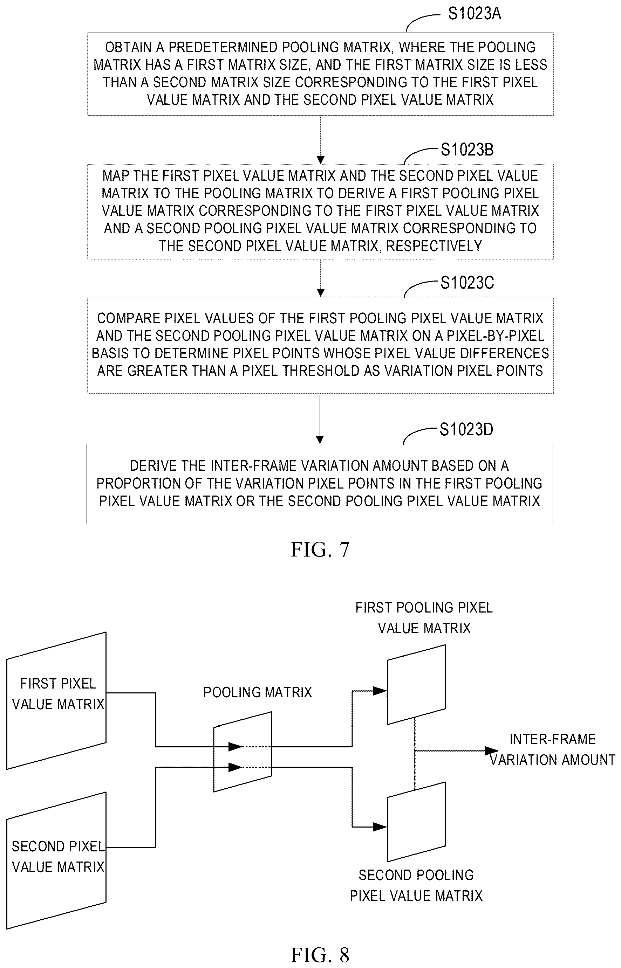

In a possible implementation, as shown in FIG. 7, the specific implementation step of step S1023 includes:

Step S1023A: obtaining a predetermined pooling matrix, where the pooling matrix has a first matrix size less than a second matrix size corresponding to the first pixel value matrix and the second pixel value matrix.

Step S1023B: mapping the first pixel value matrix and the second pixel value matrix to a pooling matrix to derive a first pooling pixel value matrix corresponding to the first pixel value matrix and a second pooling pixel value matrix corresponding to the second pixel value matrix respectively.

Step S1023C: comparing pixel values of the first pooling pixel value matrix and the second pooling pixel value matrix on a pixel-by-pixel basis to determine pixel points whose differences are greater than a pixel threshold as the variation pixel points.

**Step** S1023D: obtaining an inter-frame variation amount based on a proportion of the variation pixel points in the first pooling pixel value matrix or the second pooling pixel value matrix.

For example, the pooling matrix is a predetermined empty matrix having a first matrix size. After the first pixel value matrix of the second matrix size and the second pixel value are obtained, the first pixel value matrix and the second pixel value matrix are mapped to the pooling matrix, which is equivalent to pooling processing on the first pixel value matrix and the second pixel value matrix to derive a matrix with smaller size (first matrix size), that is, the first pooling pixel value matrix and the second pooling pixel value matrix. Then, the first pooling pixel value matrix and the second pooling pixel value matrix are compared to determine pixel points whose pixel values are inconsistent, that is, the variation pixel points. Finally, the inter-frame variation amount is derived by counting the proportion of the variation pixel points.

FIG. 8 is a schematic diagram of a process of determining an inter-frame variation amount according to an embodiment of the present disclosure, and the foregoing process is described in detail below with reference to FIG. 8. As shown in FIG. 8, the matrix size of the first pixel value matrix and a matrix size of the second pixel value matrix are both 256X256 (second matrix size), and then the first pixel value matrix and the first pixel value matrix are respectively mapped to a pooling matrix with a size of 64X64 (first matrix size) to derive a first pooling pixel value matrix and a second pooling pixel value matrix with a size of 64X64 (first matrix size). The process is to a process of performing weighted fusion on a plurality of adjacent pixels in a pixel value matrix with a relatively large size, to derive a pixel value matrix with a smaller size, and the specific operation process is not repeated. Then, pixel-by-pixel comparison is performed on the first pooling pixel value matrix and the second pooling pixel value matrix to derive a proportion of the variation pixel points, and the proportion of the variation pixel points is used as the inter-frame variation amount. For example, after 100 variation pixel points are derived by comparing pixel by pixel, the inter-frame variation amount is 100/(64x64), which is about 0.024. Then, a subsequent determination step may be performed based on the inter-frame variation amount.

In this embodiment, by performing pooling processing on the first pixel value matrix and the second pixel value matrix to derive a first pooling pixel value matrix and a second pooling pixel value matrix that are smaller in size, and comparing the first pooling pixel value matrix and the second pooling pixel value matrix to obtain the inter-frame variation amount, the noise interference in the first pixel value matrix and the second pixel value matrix can be effectively reduced, and the accuracy and the evaluation capability of the inter-frame variation amount are improved.

Step S103: obtaining a target gaze direction based on the inter-frame variation amount, where the target gaze direction is a first gaze direction or a second gaze direction, the first gaze direction is a gaze direction pre-generated based on the first reference image frame, and the second gaze direction is a gaze direction generated in real time based on the current image frame.

Further, after the inter-frame variation amount is derived, the target gaze direction is derived in a corresponding manner according to difference between the current image frame and the first reference image frame represented by the inter-frame variation amount. Specifically, if the inter-frame variation amount is less than the first threshold (indicating a small difference between the current image frame and the first reference image frame), it indicates that the eye region of the user does not change between the current image frame and the first reference image frame. In this case, the gaze direction (the first gaze direction) corresponding to the first reference image frame may be directly used as the target gaze direction, that is, the target gaze direction derived when the first reference image frame is detected is used as the target gaze direction of the current image frame. Because the first gaze direction corresponding to the first reference image frame has been generated (in the detection round of the first reference image frame as the current image frame, it has been generated), there is no need to consume computational resources for visual detection again. On the other hand, if the inter-frame variation amount is greater than the first threshold (indicating a significant difference between the current image frame and the first reference image frame), it indicates that the eye region of the user has changed greatly between the current image frame and the first reference image frame. In this case, the gaze detection needs to be performed again for the current image frame to derive the corresponding second gaze direction, and the second gaze direction is used as the target gaze direction, thereby ensuring that the current real and accurate gaze direction of the user can be obtained based on the current image frame.

The specific implementation of performing the line-of-sight detection on the image may be implemented based on a pre-trained line-of-sight detection model, and the training and using manners based on the line-of-sight detection model are the prior art known to those skilled in the art, and details are not described herein again.

In this embodiment, by obtaining the current image frame and the first reference image frame, the current image frame is an eye image collected in real time, and the first reference image frame is an eye image collected before the current image frame; obtaining an inter-frame variation amount of the current image frame relative to the first reference image frame; and deriving a target gaze direction based on the inter-frame variation amount, where the target gaze direction is a first gaze direction or a second gaze direction, the first gaze direction is a gaze direction pre-generated based on the first reference image frame, and the second gaze direction is a gaze direction generated in real time based on the current image frame. By comparing the inter-frame variation amount between the current image frame and the first reference image frame, the first gaze direction corresponding to the first reference image frame or the second gaze direction corresponding to the current image frame is opportunistically selected as the target gaze direction. Since the first gaze direction corresponding to the first reference image frame is pre-obtained, additional computation is not required, so that the computational overhead during the line-of-sight detection can be reduced, the power consumption is reduced, and the real-time performance of the line-of-sight detection is further improved.

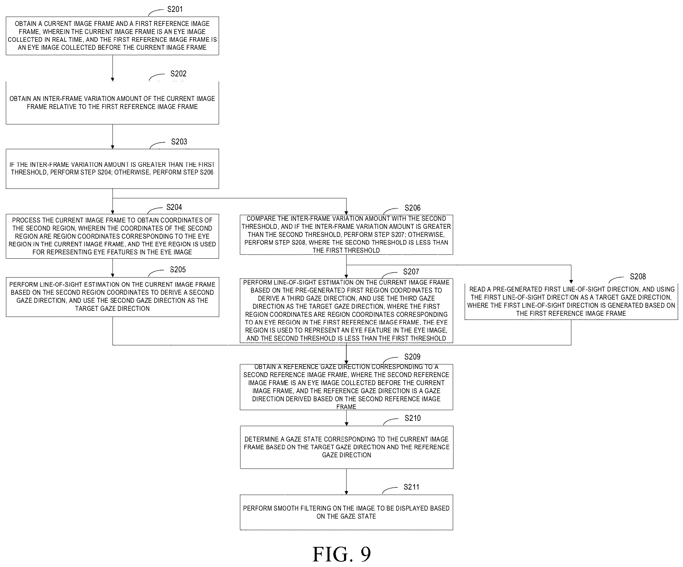

Referring to FIG. 9, FIG. 9 is a schematic flowchart 2 of a method of line-of-sight detection according to an embodiment of the present disclosure. On the basis of the embodiment shown in FIG. 2, in this embodiment, step S103 is further refined, and the step of judging the gaze state is added. The method of line-of-sight detection comprises:

Step S201: obtaining a current image frame and a first reference image frame, where the current image frame is an eye image collected in real time, and the first reference image frame is an eye image collected before the current image frame.
Step S202: obtaining an inter-frame variation amount of the current image frame relative to the first reference image frame.
Step S203: if the inter-frame variation amount is greater than the first threshold, performing Step S204; otherwise, performing Step S206.

A specific implementation of obtaining and comparing the inter-frame variation amount in steps S201-S203 is described in detail in embodiments shown in FIG. 2, and details are not described herein again, and details may be referred to the descriptions of related parts in the embodiment in FIG. 2.

Step S204: processing the current image frame to obtain coordinates of the second region, wherein the coordinates of the second region are region coordinates corresponding to the eye region in the current image frame, and the eye region is used for representing eye features in the eye image.

Step S205: performing line-of-sight estimation on the current image frame based on the second region coordinates to derive a second gaze direction, and using the second gaze direction as the target gaze direction.

For example, when the inter-frame variation amount is greater than the first threshold, it indicates that the inter-frame variation amount is relatively large, that is, the eye region of the current image frame changes greatly relative to the eye region of the first reference image frame. At this time, it is considered that the eye region is in the unstable state, and the line-of-sight estimation needs to be performed again on the current image frame, so that the derived line-of-sight estimation result is the gaze direction corresponding to the current image frame, that is, the second gaze direction. The second gaze direction is determined as the target gaze direction. Specifically, image processing is first performed on the current image frame to obtain second region coordinates corresponding to the eye region in the current image frame and representing eye features in the eye image. The specific implementation process is similar to the process of obtaining the region coordinates corresponding to the eye region in the reference image frame in step S1021 in the embodiment shown in FIG. 2, and reference may be made to the related description corresponding to step S1021, which will not be repeated here.

In a possible implementation, the second region coordinates are the region coordinates corresponding to the current image frame, and in the process of executing step S202 (referring to the implementation process of step S1021), the current image frame is processed as the baseline image frame, and the second region coordinates corresponding to the current image frame may be obtained in the process of executing step S202, and stored. Then, when the step S204 is performed, the second region coordinates can be obtained by directly reading the second region coordinates.

Further, after obtaining the second region coordinates, the line-of-sight estimation is performed based on the second region coordinate and the corresponding current image frame as input, to derive a line-of-sight estimation result corresponding to the current image frame, i.e., the second gaze direction, and the second gaze direction is determined as the final result of line-of-sight detection, i.e., the target gaze direction, where the target gaze direction is, for example, a normalized three-dimensional direction array (x, y, z). There are multiple specific implementation methods for performing the line-of-sight estimation by using the second region coordinates and the corresponding current image frame as input to derive the line-of-sight estimation result corresponding to the current image frame, such as the pupil-corneal reflection method, regression methods based on deep neural networks, regression methods based on traditional image features, and regression methods based on random forests. These methods are known to those skilled in the art and will not be elaborated here.

Step S206: comparing the inter-frame variation amount with the second threshold, and if the inter-frame variation amount is greater than the second threshold, performing step S207; otherwise, performing step S208, where the second threshold is less than the first threshold.

Further, when the inter-frame variation amount is less than or equal to the first threshold, it indicates that the inter-frame variation amount is relatively small, that is, the eye region of the current image frame does not change greatly relative to the eye region of the first reference image frame. At this time, it is considered that the eye region is in a stable state, and the pre-generated gaze direction corresponding to the first reference image frame, that is, the first gaze direction, may be considered as the final result of the line-of-sight detection (target gaze direction), that is, the method in the embodiment shown in FIG. 2, referring to the related description of step S103.

However, in the actual application process, when user shifts the line-of-sight direction, the change amount of the eye region is small. Therefore, it cannot be ensured that the line-of-sight of the user does not change based on the condition that the eye region is in the stable state. Therefore, in the step according to embodiments of the present disclosure, after it is determined that the eye region is in the stable state (the inter-frame variation amount is less than or equal to the first threshold), the inter-frame variation amount is further determined. Specifically, if the inter-frame variation amount is less than the first threshold and greater than the second threshold, it is determined that the eye region is in the stable state, but the line-of-sight direction is in the unstable state. At this time, the step S207 is performed for processing. If the inter-frame variation amount is less than the second threshold, it is determined that both the eye region and the line-of-sight direction are in a stable state. At this time, the step S208 is performed for processing, specifically referring to the related description in steps S207 and S208.

Step S207: performing line-of-sight estimation on the current image frame based on the pre-generated first region coordinates to derive a third gaze direction, and using the third gaze direction as the target gaze direction, where the first region coordinates are region coordinates corresponding to an eye region in the first reference image frame, the eye region is used to represent an eye feature in the eye image, and the second threshold is less than the first threshold.

For example, when it is determined that the eye region is in the stable state but the line-of-sight direction is in the unstable state (the inter-frame variation amount is less than the first threshold and greater than the second threshold), the line-of-sight estimation is performed in combination with the current image frame by using the pre-generated first region coordinates corresponding to the first reference image frame to derive the third gaze direction (similar to the implementation manner of deriving the second gaze direction based on the second region coordinates, referring to the specific description corresponding to step S205). Because in the round of processing the first reference image frame (that is, in the line-of-sight detection round where the first reference image frame is used as the current image frame), the corresponding first region coordinates have been generated and saved, so that the first region coordinates corresponding to the first reference image frame may be directly read, so that the process of generating the third region coordinates based on image recognition does not need to be performed, the speed of outputting the line-of-sight detection result is improved, and the computational load is reduced.

**Step** S208: reading a pre-generated first line-of-sight direction, and using the first line-of-sight direction as a target gaze direction, where the first line-of-sight direction is generated based on the first reference image frame.

For example, when it is determined that both the eye region and the line-of-sight direction are in the stable state (the inter-frame variation amount is less than the second threshold), the first gaze direction corresponding to the first reference image frame is directly obtained, and the first gaze direction is used as the result of the line-of-sight detection, i.e., the target gaze direction, without performing the step of the first region coordinates and the line-of-sight estimation, further improving the generating speed for the result of the line-of-sight detection and reducing the computational load.

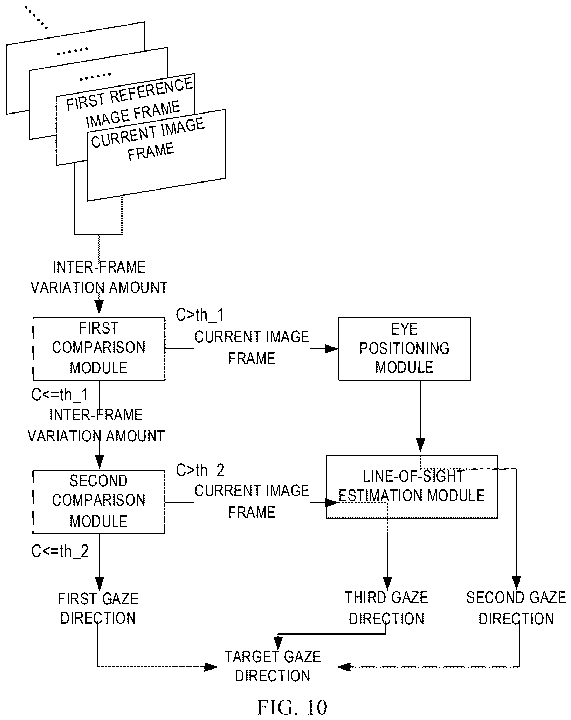

FIG. 10 is a schematic diagram of a process of generating a target gaze direction according to an embodiment of the present disclosure, and a specific implementation of the foregoing steps S201-S208 is described in detail below with reference to FIG. 10. As shown in FIG. 10, for example, the terminal device is predetermined with an eye positioning module and a line-of-sight estimation module, where the eye positioning module is used for image recognition based on the eye image and outputs the region coordinates corresponding to the eye region; the line-of-sight estimation module is used to output the gaze direction based on the eye region (and the eye image). For example, after obtaining the current image frame and the first reference image frame, an inter-frame variation amount is derived based on the current image frame and the first reference image frame. Then, the inter-frame variation amount is input to the first comparison module, the inter-frame variation amount and the first threshold are compared by using the first comparison module, and if the inter-frame variation amount is greater than the first threshold (shown as C>th_1), the eye positioning module is invoked to process the current image frame to obtain the second region coordinates, and then the line-of-sight estimation module is invoked to process the second region coordinates to derive the second gaze direction. If the inter-frame variation amount is less than or equal to the first threshold (shown as C<=th_1), the inter-frame variation amount is input to the second comparison module, the inter-frame variation amount and the second threshold are compared by using the second comparison module, and if the inter-frame variation amount is greater than the second threshold (shown as C>th_2), the line-of-sight estimation module is invoked to process the current image frame using the pre-generated first region coordinates corresponding to the first reference image frame as the input to obtain the third gaze direction, and the third gaze direction is determined as the target gaze direction; if the inter-frame variation amount is less than or equal to the second threshold (shown as C<=th_2), the pre-generated first gaze direction corresponding to the first reference image frame is obtained, and the first gaze direction is determined as the target gaze direction.

**In** this embodiment, the generation process of the corresponding target gaze direction is adopted for different value ranges of the inter-frame variation amount, thereby timely skipping the steps of performing image recognition on the image, determining the eye region (the eye positioning module), and the line-of-sight estimation (the line-of-sight estimation module), so that the computational load of line-of-sight detection is reduced and the real-time performance of line-of-sight detection is improved on the premise of ensuring the detection accuracy.

Step S209: obtaining a reference gaze direction corresponding to a second reference image frame, where the second reference image frame is an eye image collected before the current image frame, and the reference gaze direction is a gaze direction derived based on the second reference image frame.

Step S210: determining a gaze state corresponding to the current image frame based on the target gaze direction and the reference gaze direction.

For example, after obtaining the target gaze direction, the gaze state of the target gaze direction may be further determined, where the gaze state refers to a state in which the user observes the display image in the screen. The gaze state includes a fixation state and a non-fixation state. For example, the fixation state refers to a line-of-sight state in which the line-of-sight of the user always focuses a certain picture, and the non-fixation state refers to a line-of-sight state of the user's line-of-sight moving between multiple pictures. The target gaze direction is derived based on previous steps, and details are not described herein again. The reference gaze direction refers to a result of performing line-of-sight detection on the second reference image frame. Similar to the first reference image frame, the second reference image frame is also an image frame before the current image frame, for example, the Nth frame before the current image frame, where N is an integer greater than or equal to 1 before the current image frame, for example, N = 10. The specific steps of performing line-of-sight detection on the second reference image frame to derive the reference gaze direction may be similar to the process of deriving the target gaze direction in the foregoing steps. Alternatively, in the line-of-sight detection round where the second reference image frame serves as the current image frame, after the detection result (target gaze direction) is saved, and when performing step S210, the detection result of the second reference image frame is directly read to obtain the reference gaze direction. Then, the change angular velocity of the gaze direction may be derived based on the angle between the target gaze direction and the reference gaze direction and the time interval, to determine the gaze state.

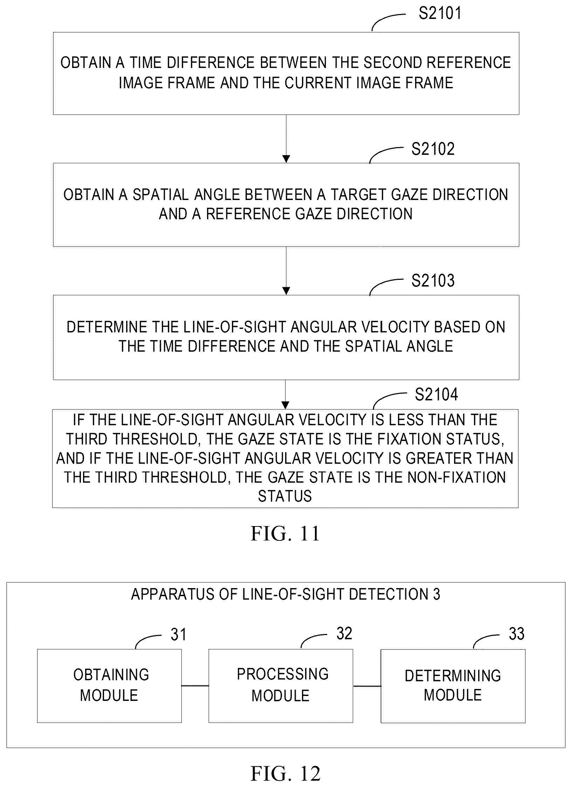

**As** shown in FIG. 11, for example, the specific implementation of step S210 includes:

Step S2101: obtaining a time difference between the second reference image frame and the current image frame.

Step S2102: obtaining a spatial angle between a target gaze direction and a reference gaze direction.

Step S2103: determining the line-of-sight angular velocity based on the time difference and the spatial angle.

Step S2104: if the line-of-sight angular velocity is less than the third threshold, the gaze state is the fixation status, and if the line-of-sight angular velocity is greater than the third threshold, the gaze state is the non-fixation status.

For example, the sampling moment corresponding to the second reference image frame and the sampling moment of the current image frame are obtained first, and the difference between the sampling moments of the two sampling moments is calculated to derive the time difference. Then, based on the spatial angle between the target gaze direction and the reference gaze direction, the spatial angle between the two is calculated. The line-of-sight angular velocity is derived by using the ratio of the spatial angle and the time difference. The line-of-sight angular velocity represents the speed of the line-of-sight angle change, the larger the line-of-sight angular velocity is, the faster the switching and panning speed of the display image (picture) is. When the line-of-sight angular velocity is greater than the third threshold, it is determined that the gaze state is the non-fixation status, otherwise, when the line-of-sight angular velocity is less than the third threshold, it is determined that the gaze state is the fixation status.

Step S211: performing smooth filtering on the image to be displayed based on the gaze state.

For example, in a related application scenario of virtual reality, when a worn terminal device (for example, a VR headset) displays a display image through a display screen, as the line-of-sight direction of the user changes, the display image displayed in the display screen may also be refreshed and rendered, so that the object in the field of view of the user is displayed in a high-precision and high-resolution texture mapping, and the object outside the field of view is displayed with low precision and low resolution texture mapping. However, when the user is in the non-fixation state (for example, the user wears the VR headset and turns around to observe the periphery), the large line-of-sight angular velocity may cause the phenomenon that the image is refreshed and rendered to appear stuck and torn, which affects the visual experience. In the present embodiment, when it is judged that the gaze state is the non-fixation state, smooth filtering is performed on the displayed image, so that the refreshing process between the displayed images can be more coherent, the screen tearing is reduced. Meanwhile, the resolution of the filtered image is reduced, the computational resources consumed by the terminal device to render the display image are further reduced, the power consumption is reduced, and the fluency is improved.

Based on the method of line-of-sight detection corresponding to FIG. 2 to FIG. 11, an embodiment of the present disclosure further provides a method of controlling a device, configured to control the electronic device according to the structure of the line-of-sight detection, including:

Obtaining a current image frame and a first reference image frame, wherein the current image frame is an eye image collected in real time, and the first reference image frame is an eye image collected before the current image frame; obtaining an inter-frame variation amount of the current image frame relative to the first reference image frame; deriving a target gaze direction based on the inter-frame variation amount; and controlling the device based on the target gaze direction.

Specifically, the specific process of determining the target gaze direction is described in detail in embodiments corresponding to FIGS. 2-11, and details may be referred to the descriptions in the foregoing embodiments, and details are not described herein again. After the target gaze direction is obtained, the device may be set based on the target gaze direction, for example, the resolution of the image displayed in the display unit (for example, the display screen) of the VR headset may be further adjusted based on the target gaze direction, so that the purposes of dynamically adjusting the display resolution by the regional area, reducing the display precision, reducing the data volume and the like can be achieved.

In a possible implementation, the obtaining an inter-frame variation amount of the current image frame relative to the first reference image frame includes: obtaining region coordinates corresponding to an eye region in a baseline image frame, where the baseline image frame is the current image frame or the first reference image frame, and the eye region is used to represent an eye feature in the eye image; extracting a first pixel value matrix in the first reference image frame and a second pixel value matrix in the current image frame based on the region coordinates; and comparing the first pixel value matrix with the second pixel value matrix to derive the inter-frame variation amount.

In a possible implementation, the obtaining region coordinates corresponding to an eye region in a baseline image frame includes: performing image recognition on the baseline image frame to obtain a first position point and a second position point, where the first position point is an inner canthus point, and the second position point is an outer canthus point; and determining the region coordinates based on the first position point and the second position point.

In a possible implementation, the eye region is a rectangular region surrounding an eye, and the region coordinates are vertex coordinates of the rectangular region; and determining the region coordinates based on the first position point and the second position point includes: obtaining an Euclidean distance between the first position point and the second position point; and performing weighted calculation on the coordinate corresponding to the first position point and the coordinate corresponding to the second position point based on the Euclidean distance to derive the vertex coordinates.

In a possible implementation, the comparing the first pixel value matrix with the second pixel value matrix to derive the inter-frame variation amount includes: obtaining a predetermined pooling matrix, where the pooling matrix has a first matrix size, and the first matrix size is less than a second matrix size corresponding to the first pixel value matrix and the second pixel value matrix; mapping the first pixel value matrix and the second pixel value matrix to the pooling matrix to derive a first pooling pixel value matrix corresponding to the first pixel value matrix and a second pooling pixel value matrix corresponding to the second pixel value matrix, respectively; comparing pixel values of the first pooling pixel value matrix and the second pooling pixel value matrix on a pixel-by-pixel basis to determine pixel points whose differences are greater than a pixel threshold as variation pixel points; and deriving the inter-frame variation amount based on a proportion of the variation pixel points in the first pooling pixel value matrix or the second pooling pixel value matrix.

In a possible implementation, the deriving a target gaze direction based on the inter-frame variation amount includes: if the inter-frame variation amount is less than a first threshold, obtaining a pre-generated first gaze direction, and determining the first gaze direction as a target gaze direction, where the first gaze direction is a gaze direction derived based on the first reference image frame; if the inter-frame variation amount is greater than the first threshold, generating a second gaze direction based on the current image frame, and determining the second gaze direction as a target gaze direction.

In a possible implementation, obtaining the pre-generated first gaze direction if the inter-frame variation amount is less than a first threshold: comparing the inter-frame variation amount with a second threshold; and if the inter-frame variation amount is less than the second threshold, reading a pre-generated first gaze direction, where the first gaze direction is generated based on the first reference image frame.

In a possible implementation, the method further includes: if the inter-frame variation amount is greater than the second threshold, performing line-of-sight estimation on the current image frame based on a pre-generated first region coordinates to derive a third gaze direction, where the first region coordinates are region coordinates corresponding to an eye region in the first reference image frame, the eye region is used to represent an eye feature in the eye image, and the second threshold is less than the first threshold;

In a possible implementation, generating the second gaze direction based on the current image frame includes: processing the current image frame to obtain second region coordinates, where the second region coordinates are region coordinates corresponding to the eye region in the current image frame, and the eye region is used to represent an eye feature in the eye image; and performing line-of-sight estimation on the current image frame based on the second region coordinates to derive the second gaze direction.

In a possible implementation, after deriving the target gaze direction, the method further includes: obtaining a reference gaze direction corresponding to the second reference image frame, where the second reference image frame is an eye image collected before the current image frame, and the reference gaze direction is based on a gaze direction derived by the second reference image frame; determining a gaze state corresponding to the current image frame based on the target gaze direction and the reference gaze direction; and performing smooth filtering on an image to be displayed based on the gaze state.

In a possible implementation, the gaze state comprises a fixation state and a non-fixation state, and the determining the gaze state corresponding to the current image frame based on the target gaze direction and the reference gaze direction includes: obtaining a time difference between a second reference image frame and the current image frame; obtaining a spatial angle between the target gaze direction and the reference gaze direction; determining a line-of-sight angular velocity based on the time difference and the spatial angle; if the line-of-sight angular velocity is less than a third threshold, the gaze state is the fixation state, and if the line-of-sight angular velocity is greater than the third threshold, the gaze state is a non-fixation state; and the performing smooth filtering on an image to be displayed based on the gaze state includes: performing smooth filtering on the image to be displayed if the gaze state is the non-fixation state.

Corresponding to the method of line-of-sight detection in above embodiments, FIG. 12 is a structural block diagram of an apparatus of line-of-sight detection according to an embodiment of the present disclosure. For ease of illustration, only portions related to embodiments of the present disclosure are shown. Referring to FIG. 12, the apparatus of line-of-sight detection 3 includes:

An obtaining module 31 is configured to obtain a current image frame and a first reference image frame, where the current image frame is an eye image collected in real time, and the first reference image frame is an eye image collected before the current image frame.

A processing module 32 is configured to obtain an inter-frame variation amount of a current image frame relative to a first reference image frame.

A determining module 33 is configured to obtain a target gaze direction based on the inter-frame variation amount, where the target gaze direction is a first gaze direction or a second gaze direction, the first gaze direction is a gaze direction pre-generated based on the first reference image frame, and the second gaze direction is a gaze direction generated in real time based on the current image frame.

In an embodiment of the present disclosure, the processing module 32 is specifically configured to: obtain region coordinates corresponding to an eye region in a baseline image frame, where the baseline image frame is the current image frame or the first reference image frame, and the eye region is used to represent an eye feature in the eye image; extract a first pixel value matrix in the first reference image frame and a second pixel value matrix in the current image frame based on the region coordinates; and compare the first pixel value matrix with the second pixel value matrix to derive the inter-frame variation amount.

In an embodiment of the present disclosure, when obtaining the region coordinates corresponding to the eye region in the reference image frame, the processing module 32 is specifically configured to: perform image recognition on the baseline image frame to derive a first position point and a second position point, where the first position point is an inner canthus point, and the second position point is an outer canthus point; and determine the region coordinates based on the first position point and the second position point.

In an embodiment of the present disclosure, the eye region is a rectangular region surrounding the eye, and the region coordinates are the vertex coordinates of the rectangular region; when determining the region coordinates based on the first position point and the second position point, the processing module 32 is specifically configured to: obtain a Euclidean distance between the first position point and the second position point; and perform weighted calculation on a coordinate corresponding to the first position point and a coordinate corresponding to the second position point based on the Euclidean distance, to derive the vertex coordinates.

In an embodiment of the present disclosure, when comparing the first pixel value matrix with the second pixel value matrix to derive the inter-frame variation amount, the processing module 32 is specifically configured to: obtain a predetermined pooling matrix, where the pooling matrix has a first matrix size, and the first matrix size is less than a second matrix size corresponding to the first pixel value matrix and the second pixel value matrix; the first pixel value matrix and the second pixel value matrix to the pooling matrix to derive a first pooling pixel value matrix corresponding to the first pixel value matrix and a second pooling pixel value matrix corresponding to the second pixel value matrix, respectively; compare pixel values of the first pooling pixel value matrix and the second pooling pixel value matrix on a pixel-by-pixel basis to determine pixel points whose differences are greater than a pixel threshold as variation pixel points; and derive the inter-frame variation amount based on a proportion of the variation pixel points in the first pooling pixel value matrix or the second pooling pixel value matrix.

In an embodiment of the present disclosure, the determining module 33 is specifically configured to: if the inter-frame variation amount is less than a first threshold, obtaining a pre-generated first gaze direction, and determining the first gaze direction as a target gaze direction, where the first gaze direction is a gaze direction derived based on the first reference image frame; and if the inter-frame variation amount is greater than the first threshold, generating a second gaze direction based on the current image frame, and determining the second gaze direction as a target gaze direction.

In an embodiment of the present disclosure, when the inter-frame variation amount is less than the first threshold and when obtaining the pre-generated first gaze direction, the determining module 33 is specifically configured to: compare the inter-frame variation amount with a second threshold; and if the inter-frame variation amount is less than the second threshold, read a pre-generated first gaze direction, where the first gaze direction is generated based on the first reference image frame.

In an embodiment of the present disclosure, the determining module 33 is further configured to: if the inter-frame variation amount is greater than the second threshold, perform line-of-sight estimation on the current image frame based on a pre-generated first region coordinates to derive a third gaze direction, where the first region coordinates are region coordinates corresponding to an eye region in the first reference image frame, the eye region is used to represent an eye feature in the eye image, and the second threshold is less than the first threshold;

In an embodiment of the present disclosure, when the inter-frame variation amount is greater than the first threshold and when generating the second gaze direction based on the current image frame, the determining module 33 is specifically configured to: process the current image frame to obtain second region coordinates, where the second region coordinates are region coordinates corresponding to the eye region in the current image frame, and the eye region is used to represent an eye feature in the eye image; and perform line-of-sight estimation on the current image frame based on the second region coordinates to derive the second gaze direction.

In an embodiment of the present disclosure, after deriving the target gaze direction, the determining module 33 is further configured to: obtain a reference gaze direction corresponding to the second reference image frame, where the second reference image frame is an eye image collected before the current image frame, and the reference gaze direction is based on a gaze direction derived by the second reference image frame; determine a gaze state corresponding to the current image frame based on the target gaze direction and the reference gaze direction; and perform smooth filtering on an image to be displayed based on the gaze state.

In an embodiment of the present disclosure, the gaze state comprises a fixation state and a non-fixation state, and when determining the gaze state corresponding to the current image frame based on the target gaze direction and the reference gaze direction, the determining module 33 is specifically configured to: obtain a time difference between a second reference image frame and the current image frame; obtain a spatial angle between the target gaze direction and the reference gaze direction; determine a line-of-sight angular velocity based on the time difference and the spatial angle; if the line-of-sight angular velocity is less than a third threshold, the gaze state is the fixation state, and if the line-of-sight angular velocity is greater than the third threshold, the gaze state is a non-fixation state; and when performing smooth filtering on an image to be displayed based on the gaze state, the determining module 33 is specifically configured to: perform smooth filtering on the image to be displayed if the gaze state is the non-fixation state.

The obtaining module 31, the processing module 32, and the determining module 33 are connected in sequence. The apparatus 3 of line-of-sight detection provided in this embodiment may perform the technical solutions of the foregoing method embodiments, and implementation principles and technical effects thereof are similar, and details are not described herein again in this embodiment.

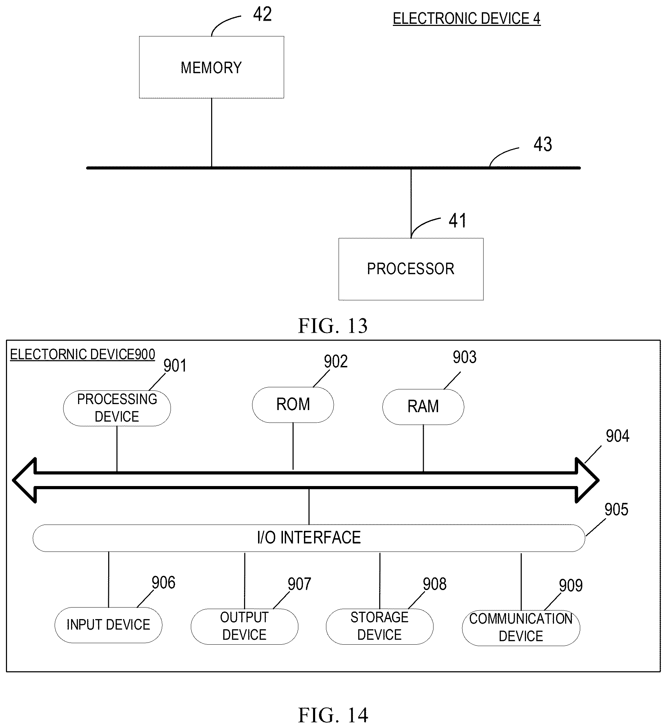

FIG. 13 is a schematic structural diagram of an electronic device according to an embodiment of the present disclosure. The electronic device includes:

A processor 41, and a memory 42 communicatively connected to the processor 41;
The memory 42 stores computer executable instructions.

The processor 41 executes the computer executable instruction stored in the memory 42, to implement the method of line-of-sight detection in embodiments shown in FIG. 2 to FIG. 11.

**Optionally,** the processor 41 and the memory 42 are connected by using a bus 43.

Related descriptions may be understood with reference to related descriptions and effects corresponding to the steps in embodiments corresponding to FIG. 2 to FIG. 11, and details are not described herein again.

FIG. 14 shows a schematic structural diagram of an electronic device 900 suitable for implementing embodiments of the present disclosure, and the electronic device 900 may be a terminal device or a server. The terminal device may include, but is not limited to, a mobile terminal such as a mobile phone, a notebook computer, a digital broadcast receiver, a personal digital assistant (PDA), a tablet computer (PAD), a portable multimedia player (PMP), an in-vehicle terminal (for example, an in-vehicle navigation terminal), and a fixed terminal such as a digital TV, a desktop computer, or the like. The electronic device shown in FIG. 14 is merely an example, and should not impose any limitation on the functions and scope of use of embodiments of the present disclosure.

**As** shown in FIG. 14, the electronic device 900 may include a processing device (for example, a central processing unit, a graphics processor, etc. ) 901, which may perform various appropriate actions and processing according to a program stored in a read only memory (ROM) 902 or a program loaded into a random access memory (RAM) 903 from a storage device 908. In the RAM 903, various programs and data required by the operation of the electronic device 900 are also stored. The processing device 901, the ROM 902, and the RAM 903 are connected to each other through a bus 904. Input / output (I / O) interface 905 is also connected to bus 904.

Generally, the following devices may be connected to the I/O interface 905: an input device 906 including, for example, a touch screen, a touch pad, a keyboard, a mouse, a camera, a microphone, an accelerometer, a gyroscope, etc.; an output device 907 including, for example, a liquid crystal display (LCD), a speaker, a vibrator, etc.; a storage device 908 including, for example, a magnetic tape, a hard disk, etc.; and a communication device 909. The communication device 909 may allow the electronic device 900 to communicate wirelessly or wired with other devices to exchange data. While FIG. 14 shows an electronic device 900 having various devices, it should be understood that it is not required to implement or have all illustrated devices. More or fewer apparatus may alternatively be implemented or provided.

**In** particular, according to an embodiment of the present disclosure, the process described above with reference to the flowchart may be implemented as a computer software program. For example, embodiments of the present disclosure include a computer program product comprising a computer program embodied on a computer readable medium, the computer program comprising program code for performing the method shown in the flowchart. In such embodiments, the computer program may be downloaded and installed from the network through the communication device 909, or installed from the storage device 908, or from the ROM 902. When the computer program is executed by the processing apparatus 901, the foregoing functions defined in the method of embodiments of the present disclosure are performed.

**It** should be noted that the computer-readable medium described above may be a computer readable signal medium, a computer readable storage medium, or any combination of the foregoing two. The computer-readable storage medium may be, for example, but not limited to, an electrical, magnetic, optical, electromagnetic, infrared, or semiconductor system, apparatus, or component, or any combination thereof. More specific examples of computer-readable storage media may include, but are not limited to, an electrical connection having one or more wires, a portable computer diskette, a hard disk, a random access memory (RAM), a read-only memory (ROM), an erasable programmable read-only memory (EPROM or Flash memory), an optical fiber, a portable compact disk read-only memory (CD-ROM), an optical storage device, a magnetic storage device, or any suitable combination of the foregoing. In the present disclosure, a computer-readable storage medium may be any tangible medium containing or storing a program that may be used by or in connection with an instruction execution system, apparatus, or component. In the present disclosure, a computer readable signal medium may include a data signal propagated in baseband or as part of a carrier, where the computer readable program code is carried. Such propagated data signals may take a variety of forms including, but not limited to, electromagnetic signals, optical signals, or any suitable combination of the foregoing. The computer readable signal medium may also be any computer readable medium other than a computer readable storage medium that may send, propagate, or transmit a program for use by or in connection with an instruction execution system, apparatus, or device. The program code embodied on the computer-readable medium may be transmitted with any suitable medium, including, but not limited to: wires, optical cables, RF (radio frequency), and the like, or any suitable combination of the foregoing.

The computer-readable medium described above may be included in the electronic device; or may be separately present without being assembled into the electronic device.

The computer-readable medium carries one or more programs, and when the one or more programs are executed by the electronic device, the electronic device is enabled to perform the method shown in the foregoing embodiments.

Computer program code for performing the operations of the present disclosure may be written in one or more programming languages, including object oriented programming languages, such as Java, Smalltalk, C++, and conventional procedural programming languages, such as the "C" language or similar programming languages. The program code may execute entirely on a user computer, partially on a user computer, as a standalone software package, partially on a user computer, partially on a remote computer, or entirely on a remote computer or server. In the case of a remote computer, the remote computer may be connected to the user computer through any kind of network, including a local area network (LAN) or a wide area network (WAN), or may be connected to an external computer (for example, using an Internet service provider for Internet connection).

The flowcharts and block diagrams in the figures illustrate architecture, functionality, and operation of possible implementations of systems, methods, and computer program products according to various embodiments of the present disclosure. In this regard, each block in the flowchart or block diagram may represent a module, program segment, or portion of code that includes one or more executable instructions for implementing the specified logical function. It should also be noted that in some alternative implementations, the functions noted in the blocks may also occur in a different order than that illustrated in the figures. For example, two consecutively represented blocks may actually be performed substantially in parallel, which may sometimes be performed in the reverse order, depending on the functionality involved. It is also noted that each block in the block diagrams and/or flowcharts, as well as combinations of blocks in the block diagrams and/or flowcharts, may be implemented with a dedicated hardware-based system that performs the specified functions or operations, or may be implemented in a combination of dedicated hardware and computer instructions.

The units involved in embodiments of the present disclosure may be implemented in software, or may be implemented in hardware. For example, the first obtaining unit may be further described as "obtaining at least two units of Internet Protocol addresses".

The functions described above may be performed, at least in part, by one or more hardware logic components. For example, without limitation, exemplary types of hardware logic components that may be used include: field programmable gate arrays (FPGAs), application specific integrated circuits (ASICs), application specific standard products (ASSPs), system-on-a-chip (SOCs), complex programmable logic devices (CPLDs), and the like.

In the context of the present disclosure, a machine-readable medium may be a tangible medium that may contain or store a program for use by or in connection with an instruction execution system, apparatus, or device. The machine-readable medium may be a machine-readable signal medium or a machine-readable storage medium. The machine-readable medium may include, but is not limited to, electronic, magnetic, optical, electromagnetic, infrared, or semiconductor systems, devices, or devices, or any suitable combination of the foregoing. More specific examples of machine-readable storage media may include electrical connections based on one or more lines, portable computer disks, hard disks, random access memory (RAM), read-only memory (ROM), erasable programmable read-only memory (EPROM or Flash memory), optical fibers, portable compact disc read-only memory (CD-ROM), optical storage devices, magnetic storage devices, or any suitable combination of the foregoing.

In a first aspect, a method of line-of-sight detection is provided according to one or more embodiments of the present disclosure, including:

Obtaining a current image frame and a first reference image frame, where the current image frame is an eye image collected in real time, and the first reference image frame is an eye image collected before the current image frame; obtaining an inter-frame variation amount of the current image frame relative to the first reference image frame; and deriving a target gaze direction based on the inter-frame variation amount, where the target gaze direction is a first gaze direction or a second gaze direction, the first gaze direction is a gaze direction pre-generated based on the first reference image frame, and the second gaze direction is a gaze direction generated in real time based on the current image frame.

According to one or more embodiments of the present disclosure, the obtaining an inter-frame variation amount of the current image frame relative to the first reference image frame includes: obtaining region coordinates corresponding to an eye region in a baseline image frame, where the baseline image frame is the current image frame or the first reference image frame, and the eye region is used to represent an eye feature in the eye image; extracting a first pixel value matrix in the first reference image frame and a second pixel value matrix in the current image frame based on the region coordinates; and comparing the first pixel value matrix with the second pixel value matrix to derive the inter-frame variation amount.

According to one or more embodiments of the present disclosure, obtaining the region coordinates corresponding to the eye region in the baseline image frame comprises: performing image recognition on the baseline image frame to derive a first position point and a second position point, where the first position point is an inner canthus point, and the second position point is an outer canthus point; determining the region coordinates based on the first position point and the second position point.

According to one or more embodiments of the present disclosure, the eye region is a rectangular region surrounding an eye, and the region coordinates are vertex coordinates of the rectangular region; and determining the region coordinates based on the first position point and the second position point comprises: obtaining a Euclidean distance between the first position point and the second position point; and performing weighted calculation on a coordinate corresponding to the first position point and a coordinate corresponding to the second position point based on the Euclidean distance, to derive the vertex coordinates.

According to one or more embodiments of the present disclosure, comparing the first pixel value matrix with the second pixel value matrix to derive the inter-frame variation amount comprises: obtaining a predetermined pooling matrix, where the pooling matrix has a first matrix size, and the first matrix size is less than a second matrix size corresponding to the first pixel value matrix and the second pixel value matrix; mapping the first pixel value matrix and the second pixel value matrix to the pooling matrix to derive a first pooling pixel value matrix corresponding to the first pixel value matrix and a second pooling pixel value matrix corresponding to the second pixel value matrix, respectively; comparing pixel values of the first pooling pixel value matrix and the second pooling pixel value matrix on a pixel-by-pixel basis to determine pixel points whose pixel value differences are greater than a pixel threshold as variation pixel points; and deriving the inter-frame variation amount based on a proportion of the variation pixel points in the first pooling pixel value matrix or the second pooling pixel value matrix.

According to one or more embodiments of the present disclosure, the deriving a target gaze direction based on the inter-frame variation amount comprises: if the inter-frame variation amount is less than a first threshold, obtaining a pre-generated first gaze direction, and determining the first gaze direction as a target gaze direction, where the first gaze direction is a gaze direction derived based on the first reference image frame; and if the inter-frame variation amount is greater than the first threshold, generating a second gaze direction based on the current image frame, and determining the second gaze direction as a target gaze direction.

According to one or more embodiments of the present disclosure, if the inter-frame variation amount is less than a first threshold, obtaining the pre-generated first gaze direction comprises: comparing the inter-frame variation amount with a second threshold; and if the inter-frame variation amount is less than the second threshold, reading a pre-generated first gaze direction, where the first gaze direction is generated based on the first reference image frame.

According to one or more embodiments of the present disclosure, the method further comprises: if the inter-frame variation amount is greater than the second threshold, performing line-of-sight estimation on the current image frame based on pre-generated first region coordinates to derive a third gaze direction, where the first region coordinates are region coordinates corresponding to an eye region in the first reference image frame, the eye region is configured to represent an eye feature in the eye image, and the second threshold is less than the first threshold.

According to one or more embodiments of the present disclosure, if the inter-frame variation amount is greater than the first threshold, generating the second gaze direction based on the current image frame comprises: processing the current image frame to obtain second region coordinates, where the second region coordinates are region coordinates corresponding to the eye region in the current image frame, and the eye region is configured to represent an eye feature in the eye image; and performing line-of-sight estimation on the current image frame based on the second region coordinates to derive the second gaze direction.

According to one or more embodiments of the present disclosure, after deriving the target gaze direction, the method further comprises: obtaining a reference gaze direction corresponding to the second reference image frame, where the second reference image frame is an eye image collected before the current image frame, and the reference gaze direction is a gaze direction derived based on the second reference image frame; determining a gaze state corresponding to the current image frame based on the target gaze direction and the reference gaze direction; and performing smooth filtering on an image to be displayed based on the gaze state.

According to one or more embodiments of the present disclosure, the gaze state comprises a fixation state and a non-fixation state, and the determining the gaze state corresponding to the current image frame based on the target gaze direction and the reference gaze direction comprises: obtaining a time difference between the second reference image frame and the current image frame; obtaining a spatial angle between the target gaze direction and the reference gaze direction; determining a line-of-sight angular velocity based on the time difference and the spatial angle; if the line-of-sight angular velocity is less than a third threshold, the gaze state is the fixation state, and if the line-of-sight angular velocity is greater than the third threshold, the gaze state is a non-fixation state; wherein the performing smooth filtering on an image to be displayed based on the gaze state comprises: performing smooth filtering on the image to be displayed if the gaze state is the non-fixation state.

According to a second aspect, a method of controlling a device is provided according to one or more embodiments of the present disclosure, including: obtaining a current image frame and a first reference image frame, where the current image frame is an eye image collected in real time, and the first reference image frame is an eye image collected before the current image frame; obtaining an inter-frame variation amount of the current image frame relative to the first reference image frame; deriving a target gaze direction based on the inter-frame variation amount; and controlling the device based on the target gaze direction.

According to one or more embodiments of the present disclosure, the obtaining an inter-frame variation amount of the current image frame relative to the first reference image frame comprises: obtaining region coordinates corresponding to an eye region in a baseline image frame, where the baseline image frame is the current image frame or the first reference image frame, and the eye region is configured to represent an eye feature in the eye image; extracting a first pixel value matrix in the first reference image frame and a second pixel value matrix in the current image frame based on the region coordinates; and comparing the first pixel value matrix with the second pixel value matrix to derive the inter-frame variation amount.

According to one or more embodiments of the present disclosure, obtaining region coordinates corresponding to an eye region in a baseline image frame comprises: performing image recognition on the baseline image frame to derive a first position point and a second position point, where the first position point is an inner canthus point, and the second position point is an outer canthus point; determining the region coordinates based on the first position point and the second position point.

According to one or more embodiments of the present disclosure, the eye region is a rectangular region surrounding an eye, and the region coordinates are vertex coordinates of the rectangular region; and determining the region coordinates based on the first position point and the second position point comprises: obtaining a Euclidean distance between the first position point and the second position point; and performing weighted calculation on a coordinate corresponding to the first position point and a coordinate corresponding to the second position point based on the Euclidean distance, to derive the vertex coordinates.

According to one or more embodiments of the present disclosure, comparing the first pixel value matrix with the second pixel value matrix to derive the inter-frame variation amount comprises: obtaining a predetermined pooling matrix, where the pooling matrix has a first matrix size, and the first matrix size is less than a second matrix size corresponding to the first pixel value matrix and the second pixel value matrix; mapping the first pixel value matrix and the second pixel value matrix to the pooling matrix to derive a first pooling pixel value matrix corresponding to the first pixel value matrix and a second pooling pixel value matrix corresponding to the second pixel value matrix, respectively; comparing pixel values of the first pooling pixel value matrix and the second pooling pixel value matrix on a pixel-by-pixel basis to determine pixel points whose pixel value differences are greater than a pixel threshold as variation pixel points; and deriving the inter-frame variation amount based on a proportion of the variation pixel points in the first pooling pixel value matrix or the second pooling pixel value matrix.

According to one or more embodiments of the present disclosure, deriving a target gaze direction based on the inter-frame variation amount comprises: if the inter-frame variation amount is less than a first threshold, obtaining a pre-generated first gaze direction, and determining the first gaze direction as a target gaze direction, where the first gaze direction is a gaze direction derived based on the first reference image frame; and if the inter-frame variation amount is greater than the first threshold, generating a second gaze direction based on the current image frame, and determining the second gaze direction as a target gaze direction.

According to one or more embodiments of the present disclosure, if the inter-frame variation amount is less than a first threshold, obtaining the pre-generated first gaze direction comprises: comparing the inter-frame variation amount with a second threshold; and if the inter-frame variation amount is less than the second threshold, reading a pre-generated first gaze direction, where the first gaze direction is generated based on the first reference image frame.

According to one or more embodiments of the present disclosure, the method further comprises: if the inter-frame variation amount is greater than the second threshold, performing line-of-sight estimation on the current image frame based on pre-generated first region coordinates to derive a third gaze direction, where the first region coordinates are region coordinates corresponding to an eye region in the first reference image frame, the eye region is configured to represent an eye feature in the eye image, and the second threshold is less than the first threshold;

According to one or more embodiments of the present disclosure, if the inter-frame variation amount is greater than the first threshold, generating the second gaze direction based on the current image frame comprises: processing the current image frame to obtain second region coordinates, where the second region coordinates are region coordinates corresponding to the eye region in the current image frame, and the eye region is configured to represent an eye feature in the eye image; and performing line-of-sight estimation on the current image frame based on the second region coordinates to derive the second gaze direction.

According to one or more embodiments of the present disclosure, after deriving the target gaze direction, the method further comprises: obtaining a reference gaze direction corresponding to the second reference image frame, where the second reference image frame is an eye image collected before the current image frame, and the reference gaze direction is a gaze direction derived based on the second reference image frame; determining a gaze state corresponding to the current image frame based on the target gaze direction and the reference gaze direction; and performing smooth filtering on an image to be displayed based on the gaze state.

According to one or more embodiments of the present disclosure, the gaze state comprises a fixation state and a non-fixation state, and the determining the gaze state corresponding to the current image frame based on the target gaze direction and the reference gaze direction comprises: obtaining a time difference between the second reference image frame and the current image frame; obtaining a spatial angle between the target gaze direction and the reference gaze direction; determining a line-of-sight angular velocity based on the time difference and the spatial angle; if the line-of-sight angular velocity is less than a third threshold, the gaze state is the fixation state, and if the line-of-sight angular velocity is greater than the third threshold, the gaze state is a non-fixation state; wherein the performing smooth filtering on an image to be displayed based on the gaze state comprises: performing smooth filtering on the image to be displayed if the gaze state is the non-fixation state.

According to a third aspect, an apparatus of line-of-sight detection is provided according to one or more embodiments of the present disclosure, including:

an obtaining module configured to obtain a current image frame and a first reference image frame, where the current image frame is an eye image collected in real time, and the first reference image frame is an eye image collected before the current image frame;

a processing module configured to obtain an inter-frame variation amount of the current image frame relative to the first reference image frame;

a determining module configured to derive a target gaze direction based on the inter-frame variation amount, where the target gaze direction is a first gaze direction or a second gaze direction, the first gaze direction is a gaze direction pre-generated based on the first reference image frame, and the second gaze direction is a gaze direction generated in real time based on the current image frame.

According to one or more embodiments of the present disclosure, the processing module is specifically configured to: obtain region coordinates corresponding to an eye region in a baseline image frame, where the baseline image frame is the current image frame or the first reference image frame, and the eye region is configured to represent an eye feature in the eye image; extract a first pixel value matrix in the first reference image frame and a second pixel value matrix in the current image frame based on the region coordinates; and compare the first pixel value matrix with the second pixel value matrix to derive the inter-frame variation amount.

According to one or more embodiments of the present disclosure, the processor is further configured to: perform image recognition on the baseline image frame to derive a first position point and a second position point, where the first position point is an inner canthus point, and the second position point is an outer canthus point; determine the region coordinates based on the first position point and the second position point.

According to one or more embodiments of the present disclosure, the eye region is a rectangular region surrounding an eye, and the region coordinates are vertex coordinates of the rectangular region ; when determining the region coordinates based on the first position point and the second position point, the processing module is specifically configured to: obtain a Euclidean distance between the first position point and the second position point; and perform weighted calculation on a coordinate corresponding to the first position point and a coordinate corresponding to the second position point based on the Euclidean distance, to derive the vertex coordinates.

According to one or more embodiments of the present disclosure, when comparing the first pixel value matrix with the second pixel value matrix to derive the inter-frame variation amount, the processing module is specifically configured to: obtain a predetermined pooling matrix, where the pooling matrix has a first matrix size, and the first matrix size is less than a second matrix size corresponding to the first pixel value matrix and the second pixel value matrix; map the first pixel value matrix and the second pixel value matrix to the pooling matrix to derive a first pooling pixel value matrix corresponding to the first pixel value matrix and a second pooling pixel value matrix corresponding to the second pixel value matrix, respectively; compare pixel values of the first pooling pixel value matrix and the second pooling pixel value matrix on a pixel-by-pixel basis to determine pixel points whose pixel value differences are greater than a pixel threshold as variation pixel points; and derive the inter-frame variation amount based on a proportion of the variation pixel points in the first pooling pixel value matrix or the second pooling pixel value matrix.

According to one or more embodiments of the present disclosure, the determining module is specifically configured to: if the inter-frame variation amount is less than a first threshold, obtain a pre-generated first gaze direction, and determine the first gaze direction as a target gaze direction, where the first gaze direction is a gaze direction derived based on the first reference image frame; and if the inter-frame variation amount is greater than the first threshold, generate a second gaze direction based on the current image frame, and determine the second gaze direction as a target gaze direction.

According to one or more embodiments of the present disclosure, if the inter-frame variation amount is less than a first threshold, when obtaining the pre-generated first gaze direction, the determining module is specifically configured to: compare the inter-frame variation amount with a second threshold; and if the inter-frame variation amount is less than the second threshold, read a pre-generated first gaze direction, where the first gaze direction is generated based on the first reference image frame .

According to one or more embodiments of the present disclosure, the determining module is further configured to: if the inter-frame variation amount is greater than the second threshold, perform line-of-sight estimation on the current image frame based on pre-generated first region coordinates to derive a third gaze direction, where the first region coordinates are region coordinates corresponding to an eye region in the first reference image frame, the eye region is configured to represent an eye feature in the eye image, and the second threshold is less than the first threshold;

According to one or more embodiments of the present disclosure, if the inter-frame variation amount is greater than the first threshold, when generating the second gaze direction based on the current image frame, the determining module is specifically configured to: process the current image frame to obtain second region coordinates, where the second region coordinates are region coordinates corresponding to the eye region in the current image frame, and the eye region is configured to represent an eye feature in the eye image; and perform line-of-sight estimation on the current image frame based on the second region coordinates to derive the second gaze direction.

According to one or more embodiments of the present disclosure, after deriving the target gaze direction, the determining module is further configured to: obtain a reference gaze direction corresponding to the second reference image frame, where the second reference image frame is an eye image collected before the current image frame, and the reference gaze direction is a gaze direction derived based on the second reference image frame; determine a gaze state corresponding to the current image frame based on the target gaze direction and the reference gaze direction; and perform smooth filtering on an image to be displayed based on the gaze state.

According to one or more embodiments of the present disclosure, the gaze state comprises a fixation state and a non-fixation state, and when determining the gaze state corresponding to the current image frame based on the target gaze direction and the reference gaze direction, the determining module is specifically configured to: obtain a time difference between the second reference image frame and the current image frame; obtain a spatial angle between the target gaze direction and the reference gaze direction; determine a line-of-sight angular velocity based on the time difference and the spatial angle; if the line-of-sight angular velocity is less than a third threshold, the gaze state is the fixation state, and if the line-of-sight angular velocity is greater than the third threshold, the gaze state is a non-fixation state; and when the performing smooth filtering on an image to be displayed based on the gaze state, the determining module is specifically configured to: performing smooth filtering on the image to be displayed if the gaze state is the non-fixation state.

According to a fourth aspect, an electronic device is provided according to one or more embodiments of the present disclosure, including: a processor, and a memory communicatively connected to the processor;

> The memory storing computer executable instructions;
> the processor executes the computer executable instructions stored in the memory to implement the method of line-of-sight detection according to the first aspect and various possible designs of the first aspect, or the method of controlling a device according to the second aspect and the possible designs of the second aspect.

According to a fourth aspect, a computer-readable storage medium is provided according to one or more embodiments of the present disclosure, where the computer-executable instructions, when executed by a processor, implement the method of line-of-sight detection according to the first aspect and various possible designs of the first aspect, or the method of controlling a device according to the second aspect and the possible designs of the second aspect.

According to a fifth aspect, an embodiment of the present disclosure provides a computer program product, including a computer program, where the computer program, when executed by a processor, implements the method of line-of-sight detection according to the first aspect and various possible designs of the first aspect, or the method of controlling a device according to the second aspect and the possible designs of the second aspect.

The above description is merely the preferred embodiments of this disclosure and the explanation of the applied technical principles. Those skilled in the art should understand that the scope of disclosure in the present document is not limited to the specific combination of technical features described above but also encompasses other technical solutions formed by any combination of the above technical features or their equivalent features without departing from the concept of the disclosure. For example, the above features can be interchanged with technical features disclosed in this document (but not limited to) having similar functions to form other technical solutions.

Furthermore, although the operations are depicted in a specific order, this should not be construed as requiring those operations to be performed in the particular order shown or in sequential order. In certain circumstances, multitasking and parallel processing may be advantageous. Likewise, although several specific implementation details are included in the discussion above, these should not be construed as limiting the scope of the present disclosure. Certain features described in the context of separate embodiments can also be implemented in combination in a single embodiment. Conversely, various features described in the context of a single embodiment can also be implemented separately or in any suitable sub-combination in multiple embodiments.

Although the subject matter has been described using specific language related to structural features and/or methodological acts, it should be understood that the subject matter defined in the appended claims is not necessarily limited to the specific features or acts described above. Rather, the specific features and acts described above are disclosed as example forms of implementing the claims.

**Claims**

1. A method of line-of-sight detection, comprising:

> obtaining a current image frame and a first reference image frame, wherein the current image frame is an eye image collected in real time, and the first reference image frame is an eye image collected before the current image frame;
> obtaining an inter-frame variation amount of the current image frame relative to the first reference image frame; and
> deriving a target gaze direction based on the inter-frame variation amount, where the target gaze direction is a first gaze direction or a second gaze direction, the first gaze direction is a gaze direction pre-generated based on the first reference image frame, and the second gaze direction is a gaze direction generated in real time based on the current image frame.

2. The method of claim 1, wherein obtaining an inter-frame variation amount of the current image frame relative to the first reference image frame comprises:

   obtaining region coordinates corresponding to an eye region in a baseline image frame, where the baseline image frame is the current image frame or the first reference image frame, and the eye region is configured to represent an eye feature in the eye image;
   extracting a first pixel value matrix in the first reference image frame and a second pixel value matrix in the current image frame based on the region coordinates; and
   comparing the first pixel value matrix with the second pixel value matrix to derive the inter-frame variation amount.

3. The method of claim 2, wherein obtaining region coordinates corresponding to an eye region in a baseline image frame comprises:

   performing image recognition on the baseline image frame to derive a first position point and a second position point, where the first position point is an inner canthus point, and the second position point is an outer canthus point;
   determining the region coordinates based on the first position point and the second position point.

4. The method of claim 3, wherein the eye region is a rectangular region surrounding an eye, and the region coordinates are vertex coordinates of the rectangular region;
   wherein determining the region coordinates based on the first position point and the second position point comprises:

   obtaining a Euclidean distance between the first position point and the second position point; and
   performing weighted calculation on a coordinate corresponding to the first position point and a coordinate corresponding to the second position point based on the Euclidean distance, to derive the vertex coordinates.

5. The method of claim 2, wherein comparing the first pixel value matrix with the second pixel value matrix to derive the inter-frame variation amount comprises:

   obtaining a predetermined pooling matrix, where the pooling matrix has a first matrix size, and the first matrix size is less than a second matrix size corresponding to the first pixel value matrix and the second pixel value matrix;
   mapping the first pixel value matrix and the second pixel value matrix to the pooling matrix to derive a first pooling pixel value matrix corresponding to the first pixel value matrix and a second pooling pixel value matrix corresponding to the second pixel value matrix, respectively;
   comparing pixel values of the first pooling pixel value matrix and the second pooling pixel value matrix on a pixel-by-pixel basis to determine pixel points whose pixel value differences are greater than a pixel threshold as variation pixel points; and
   deriving the inter-frame variation amount based on a proportion of the variation pixel points in the first pooling pixel value matrix or the second pooling pixel value matrix.

6. The method of claim 1, wherein deriving a target gaze direction based on the inter-frame variation amount comprises:

   if the inter-frame variation amount is less than a first threshold, obtaining a pre-generated first gaze direction, and determining the first gaze direction as a target gaze direction, where the first gaze direction is a gaze direction derived based on the first reference image frame; and
   if the inter-frame variation amount is greater than the first threshold, generating a second gaze direction based on the current image frame, and determining the second gaze direction as a target gaze direction.

7. The method of claim 6, wherein if the inter-frame variation amount is less than a first threshold, obtaining the pre-generated first gaze direction comprises:

   comparing the inter-frame variation amount with a second threshold; and
   if the inter-frame variation amount is less than the second threshold, reading a pre-generated first gaze direction, where the first gaze direction is generated based on the first reference image frame.

8. The method of claim 7, wherein the method further comprises:
   if the inter-frame variation amount is greater than the second threshold, performing line-of-sight estimation on the current image frame based on pre-generated first region coordinates to derive a third gaze direction, where the first region coordinates are region coordinates corresponding to an eye region in the first reference image frame, the eye region is configured to represent an eye feature in the eye image, and the second threshold is less than the first threshold.

9. The method of claim 6, wherein if the inter-frame variation amount is greater than the first threshold, generating the second gaze direction based on the current image frame comprises:

    processing the current image frame to obtain second region coordinates, where the second region coordinates are region coordinates corresponding to the eye region in the current image frame, and the eye region is configured to represent an eye feature in the eye image; and performing line-of-sight estimation on the current image frame based on the second region coordinates to derive the second gaze direction.

10. The method of claim 1, wherein after deriving the target gaze direction, the method further comprises:

    obtaining a reference gaze direction corresponding to the second reference image frame, where the second reference image frame is an eye image collected before the current image frame, and the reference gaze direction is a gaze direction derived based on the second reference image frame;
    determining a gaze state corresponding to the current image frame based on the target gaze direction and the reference gaze direction; and performing smooth filtering on an image to be displayed based on the gaze state.

11. The method of claim 10, wherein the gaze state comprises a fixation state and a non-fixation state, and the determining the gaze state corresponding to the current image frame based on the target gaze direction and the reference gaze direction comprises:

    obtaining a time difference between the second reference image frame and the current image frame;
    obtaining a spatial angle between the target gaze direction and the reference gaze direction;
    determining a line-of-sight angular velocity based on the time difference and the spatial angle;
    if the line-of-sight angular velocity is less than a third threshold, the gaze state is the fixation state, and if the line-of-sight angular velocity is greater than the third threshold, the gaze state is a non-fixation state;
    wherein the performing smooth filtering on an image to be displayed based on the gaze state comprises:
    performing smooth filtering on the image to be displayed if the gaze state is the non-fixation state.

12. A method of controlling a device, comprising:

    obtaining a current image frame and a first reference image frame, where the current image frame is an eye image collected in real time, and the first reference image frame is an eye image collected before the current image frame;
    obtaining an inter-frame variation amount of the current image frame relative to the first reference image frame;
    deriving a target gaze direction based on the inter-frame variation amount; and controlling the device based on the target gaze direction.

13. An apparatus of line-of-sight detection, comprising:

    an obtaining module configured to obtain a current image frame and a first reference image frame, where the current image frame is an eye image collected in real time, and the first reference image frame is an eye image collected before the current image frame;
    a processing module configured to obtain an inter-frame variation amount of the current image frame relative to the first reference image frame;
    a determining module configured to derive a target gaze direction based on the inter-frame variation amount, where the target gaze direction is a first gaze direction or a second gaze direction, the first gaze direction is a gaze direction pre-generated based on the first reference image frame, and the second gaze direction is a gaze direction generated in real time based on the current image frame.

14. An electronic device comprising: a processor, and a memory communicatively connected to the processor;

    the memory storing computer executable instructions;
    the processor executes the computer executable instructions stored in the memory to implement the method of line-of-sight detection of any of claims 1 to 11, or the method of controlling a device of claim 12.

15. A computer-readable storage medium having computer-executable instructions stored thereon, wherein the computer-executable instructions, when executed by a processor, implement the method of line-of-sight detection of any of claims 1 to 11, or the method of controlling a device of claim 12.

16. A computer program product, comprising a computer program, wherein the computer program, when executed by a processor, implements the method of line-of-sight detection of any of claims 1 to 11, or the method of controlling a device of claim 12.

VR
HEADSET

IMAGE
COLLECTION
UNIT

FIG. 1

S101

OBTAIN A CURRENT IMAGE FRAME AND A FIRST REFERENCE IMAGE FRAME, WHEREIN THE CURRENT IMAGE FRAME IS AN EYE IMAGE COLLECTED IN REAL TIME, AND THE FIRST REFERENCE IMAGE FRAME IS AN EYE IMAGE COLLECTED BEFORE THE CURRENT IMAGE FRAME

S102

OBTAIN AN INTER-FRAME VARIATION AMOUNT OF THE CURRENT IMAGE FRAME RELATIVE TO THE FIRST REFERENCE IMAGE FRAME

S103

DERIVE A TARGET GAZE DIRECTION BASED ON THE INTER-FRAME VARIATION AMOUNT, WHERE THE TARGET GAZE DIRECTION IS A FIRST GAZE DIRECTION OR A SECOND GAZE DIRECTION, THE FIRST GAZE DIRECTION IS A GAZE DIRECTION PRE-GENERATED BASED ON THE FIRST REFERENCE IMAGE FRAME, AND THE SECOND GAZE DIRECTION IS A GAZE DIRECTION GENERATED IN REAL TIME BASED ON THE CURRENT IMAGE FRAME

FIG. 2

S1021

OBTAIN REGION COORDINATES CORRESPONDING TO AN EYE REGION IN A BASELINE IMAGE FRAME, WHERE THE BASELINE IMAGE FRAME IS THE CURRENT IMAGE FRAME OR THE FIRST REFERENCE IMAGE FRAME, AND THE EYE REGION IS CONFIGURED TO REPRESENT AN EYE FEATURE IN THE EYE IMAGE

S1022

EXTRACT A FIRST PIXEL VALUE MATRIX IN THE FIRST REFERENCE IMAGE FRAME AND A SECOND PIXEL VALUE MATRIX IN THE CURRENT IMAGE FRAME BASED ON THE REGION COORDINATES

S1023

COMPARE THE FIRST PIXEL VALUE MATRIX WITH THE SECOND PIXEL VALUE MATRIX TO DERIVE THE INTER-FRAME VARIATION AMOUNT

FIG. 3

EYE IMAGE

EYE REGION

P1    P2

FIG. 4

S1021A

PERFORM IMAGE RECOGNITION ON THE BASELINE IMAGE FRAME TO DERIVE A FIRST POSITION POINT AND A SECOND POSITION POINT, WHERE THE FIRST POSITION POINT IS AN INNER CANTHUS POINT, AND THE SECOND POSITION POINT IS AN OUTER CANTHUS POINT

S1021B

DETERMINE THE REGION COORDINATES BASED ON THE FIRST POSITION POINT AND THE SECOND POSITION POINT

FIG. 5

EYE IMAGE

P1[$x1,y1$]   EYE REGION   P3[$x2,y1$]

EYE REGION

PO[$xo,yo$]

PI[$xi,yi$]    d

P2[$x1,y2$]    P4[$x2,y2$]

FIG. 6

S1023A

OBTAIN A PREDETERMINED POOLING MATRIX, WHERE THE POOLING MATRIX HAS A FIRST MATRIX SIZE, AND THE FIRST MATRIX SIZE IS LESS THAN A SECOND MATRIX SIZE CORRESPONDING TO THE FIRST PIXEL VALUE MATRIX AND THE SECOND PIXEL VALUE MATRIX

S1023B

MAP THE FIRST PIXEL VALUE MATRIX AND THE SECOND PIXEL VALUE MATRIX TO THE POOLING MATRIX TO DERIVE A FIRST POOLING PIXEL VALUE MATRIX CORRESPONDING TO THE FIRST PIXEL VALUE MATRIX AND A SECOND POOLING PIXEL VALUE MATRIX CORRESPONDING TO THE SECOND PIXEL VALUE MATRIX, RESPECTIVELY

S1023C

COMPARE PIXEL VALUES OF THE FIRST POOLING PIXEL VALUE MATRIX AND THE SECOND POOLING PIXEL VALUE MATRIX ON A PIXEL-BY-PIXEL BASIS TO DETERMINE PIXEL POINTS WHOSE PIXEL VALUE DIFFERENCES ARE GREATER THAN A PIXEL THRESHOLD AS VARIATION PIXEL POINTS

S1023D

DERIVE THE INTER-FRAME VARIATION AMOUNT BASED ON A PROPORTION OF THE VARIATION PIXEL POINTS IN THE FIRST POOLING PIXEL VALUE MATRIX OR THE SECOND POOLING PIXEL VALUE MATRIX

FIG. 7

FIRST POOLING PIXEL VALUE MATRIX

FIRST PIXEL VALUE MATRIX

POOLING MATRIX

INTER-FRAME VARIATION AMOUNT

SECOND PIXEL VALUE MATRIX

SECOND POOLING PIXEL VALUE MATRIX

FIG. 8

S201

OBTAIN A CURRENT IMAGE FRAME AND A FIRST REFERENCE IMAGE FRAME, WHEREIN THE CURRENT IMAGE FRAME IS AN EYE IMAGE COLLECTED IN REAL TIME, AND THE FIRST REFERENCE IMAGE FRAME IS AN EYE IMAGE COLLECTED BEFORE THE CURRENT IMAGE FRAME

S202

OBTAIN AN INTER-FRAME VARIATION AMOUNT OF THE CURRENT IMAGE FRAME RELATIVE TO THE FIRST REFERENCE IMAGE FRAME

S203

IF THE INTER-FRAME VARIATION AMOUNT IS GREATER THAN THE FIRST THRESHOLD, PERFORM STEP S204; OTHERWISE, PERFORM STEP S206

S204

PROCESS THE CURRENT IMAGE FRAME TO OBTAIN COORDINATES OF THE SECOND REGION, WHEREIN THE COORDINATES OF THE SECOND REGION ARE REGION COORDINATES CORRESPONDING TO THE EYE REGION IN THE CURRENT IMAGE FRAME, AND THE EYE REGION IS USED FOR REPRESENTING EYE FEATURES IN THE EYE IMAGE

S206

COMPARE THE INTER-FRAME VARIATION AMOUNT WITH THE SECOND THRESHOLD, AND IF THE INTER-FRAME VARIATION AMOUNT IS GREATER THAN THE SECOND THRESHOLD, PERFORM STEP S207; OTHERWISE, PERFORM STEP S208, WHERE THE SECOND THRESHOLD IS LESS THAN THE FIRST THRESHOLD

S205

PERFORM LINE-OF-SIGHT ESTIMATION ON THE CURRENT IMAGE FRAME BASED ON THE SECOND REGION COORDINATES TO DERIVE A SECOND GAZE DIRECTION, AND USE THE SECOND GAZE DIRECTION AS THE TARGET GAZE DIRECTION

S207

PERFORM LINE-OF-SIGHT ESTIMATION ON THE CURRENT IMAGE FRAME BASED ON THE PRE-GENERATED FIRST REGION COORDINATES TO DERIVE A THIRD GAZE DIRECTION, AND USE THE THIRD GAZE DIRECTION AS THE TARGET GAZE DIRECTION, WHERE THE FIRST REGION COORDINATES ARE REGION COORDINATES CORRESPONDING TO AN EYE REGION IN THE FIRST REFERENCE IMAGE FRAME, THE EYE REGION IS USED TO REPRESENT AN EYE FEATURE IN THE EYE IMAGE, AND THE SECOND THRESHOLD IS LESS THAN THE FIRST THRESHOLD

S208

READ A PRE-GENERATED FIRST LINE-OF-SIGHT DIRECTION, AND USING THE FIRST LINE-OF-SIGHT DIRECTION AS A TARGET GAZE DIRECTION, WHERE THE FIRST LINE-OF-SIGHT DIRECTION IS GENERATED BASED ON THE FIRST REFERENCE IMAGE FRAME

S209

OBTAIN A REFERENCE GAZE DIRECTION CORRESPONDING TO A SECOND REFERENCE IMAGE FRAME, WHERE THE SECOND REFERENCE IMAGE FRAME IS AN EYE IMAGE COLLECTED BEFORE THE CURRENT IMAGE FRAME, AND THE REFERENCE GAZE DIRECTION IS A GAZE DIRECTION DERIVED BASED ON THE SECOND REFERENCE IMAGE FRAME

S210

DETERMINE A GAZE STATE CORRESPONDING TO THE CURRENT IMAGE FRAME BASED ON THE TARGET GAZE DIRECTION AND THE REFERENCE GAZE DIRECTION

S211

PERFORM SMOOTH FILTERING ON THE IMAGE TO BE DISPLAYED BASED ON THE GAZE STATE

FIG. 9

FIRST REFERENCE IMAGE FRAME

CURRENT IMAGE FRAME

INTER-FRAME VARIATION AMOUNT

FIRST COMPARISON MODULE

C>th_1 CURRENT IMAGE FRAME

EYE POSITIONING MODULE

C<=th_1 INTER-FRAME VARIATION AMOUNT

SECOND COMPARISON MODULE

C>th_2 CURRENT IMAGE FRAME

LINE-OF-SIGHT ESTIMATION MODULE

C<=th_2

FIRST GAZE DIRECTION

THIRD GAZE DIRECTION

SECOND GAZE DIRECTION

TARGET GAZE DIRECTION

FIG. 10

S2101

OBTAIN A TIME DIFFERENCE BETWEEN THE SECOND REFERENCE IMAGE FRAME AND THE CURRENT IMAGE FRAME

S2102

OBTAIN A SPATIAL ANGLE BETWEEN A TARGET GAZE DIRECTION AND A REFERENCE GAZE DIRECTION

S2103

DETERMINE THE LINE-OF-SIGHT ANGULAR VELOCITY BASED ON THE TIME DIFFERENCE AND THE SPATIAL ANGLE

S2104

IF THE LINE-OF-SIGHT ANGULAR VELOCITY IS LESS THAN THE THIRD THRESHOLD, THE GAZE STATE IS THE FIXATION STATUS, AND IF THE LINE-OF-SIGHT ANGULAR VELOCITY IS GREATER THAN THE THIRD THRESHOLD, THE GAZE STATE IS THE NON-FIXATION STATUS

FIG. 11

APPARATUS OF LINE-OF-SIGHT DETECTION 3

31

OBTAINING MODULE

32

PROCESSING MODULE

33

DETERMINING MODULE

FIG. 12

ELECTRONIC DEVICE 4

42

MEMORY

43

41

PROCESSOR

FIG. 13

ELECTORNIC DEVICE900

901

PROCESSING
DEVICE

902

ROM

903

RAM

904

905

I/O INTERFACE

906

INPUT DEVICE

907

OUTPUT
DEVICE

908

STORAGE
DEVICE

909

COMMUNICATION
DEVICE

FIG. 14

## INTERNATIONAL SEARCH REPORT

| International application No. |
| --- |
| **PCT/CN2023/138083** |

### A. CLASSIFICATION OF SUBJECT MATTER

G06V40/18(2022.01)i; G06V10/75(2022.01)i

According to International Patent Classification (IPC) or to both national classification and IPC

### B. FIELDS SEARCHED

Minimum documentation searched (classification system followed by classification symbols)

IPC: G06V

Documentation searched other than minimum documentation to the extent that such documents are included in the fields searched

Electronic data base consulted during the international search (name of data base and, where practicable, search terms used)

CNTXT, CNABS, WPABS, WPABSC, ENTXT, ENTXTC, DWPI, CNKI, IEEE: 视线, 检测, 图像, 眼, 帧, 差, 变化, 参考, 比较, 矩阵, sight, line, sightline, detect+, image?, eye, frame, difference, change, reference, compar+, matrix

### C. DOCUMENTS CONSIDERED TO BE RELEVANT

| Category* | Citation of document, with indication, where appropriate, of the relevant passages | Relevant to claim No. |
| --- | --- | --- |
| PX | CN 115984950 A (BEIJING BYTEDANCE NETWORK TECHNOLOGY CO., LTD.) 18 April 2023 (2023-04-18)<br>    claims 1-16 | 1-16 |
| X | WO 2022246804 A1 (BOE TECHNOLOGY GROUP CO., LTD.) 01 December 2022 (2022-12-01)<br>    description, pages 1 and 5-15 | 1-16 |
| A | CN 109189216 A (BEIJING 7INVENSUN TECHNOLOGY CO., LTD.) 11 January 2019 (2019-01-11)<br>    entire document | 1-16 |
| A | CN 110363133 A (GUANGZHOU BAIGUOYUAN INFORMATION TECHNOLOGY CO., LTD.) 22 October 2019 (2019-10-22)<br>    entire document | 1-16 |

☐ Further documents are listed in the continuation of Box C.　　☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **04 February 2024** | **08 February 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/138083**

| Patent document cited in search report | | | Publication date (day/month/year) | Patent family member(s) | | | Publication date (day/month/year) |
|---|---|---|---|---|---|---|---|
| CN | 115984950 | A | 18 April 2023 | None | | | |
| WO | 2022246804 | A1 | 01 December 2022 | CN | 115699112 | A | 03 February 2023 |
| CN | 109189216 | A | 11 January 2019 | None | | | |
| CN | 110363133 | A | 22 October 2019 | EP | 3998547 | A1 | 18 May 2022 |
| | | | | EP | 3998547 | A4 | 10 August 2022 |
| | | | | WO | 2021004257 | A1 | 14 January 2021 |
| | | | | US | 2022254058 | A1 | 11 August 2022 |
| | | | | SG | 11202200244 | A | 25 February 2022 |
| | | | | RU | 2782543 | C1 | 31 October 2022 |

Form PCT/ISA/210 (patent family annex) (July 2022)

**EP 4 645 271 A1**

**Patent documents cited in the description**

- CN 202211716327X